# EUROPEAN PATENT APPLICATION

(11) **EP 4 393 312 A1**
(43) Date of publication of application: **03.07.2024**
(21) Application number: 22217370.0
(22) Date of filing: 30.12.2022
(51) Int. Cl.: A23C 20/00, A23C 20/02, A23J 1/14, A23J 3/14, A23L 11/30

(54) **A WET PULSE PROTEIN CONCENTRATE AND A PROCESS OF PRODUCING THEREOF**

(71) Applicant: Locusia Oy, 00790 Helsinki (FI)
(72) Inventor: Koivu, Kimmo, 00790 Helsinki (FI); Kanerva, Anne, 00790 Helsinki (FI)
(74) Representative: Espatent Oy

(57) **Abstract**

A wet pulse protein concentrate, comprising: 55 - 80 wt-% of moisture, and 20 - 45 wt-% of dry matter, of the total weight of the wet pulse protein concentrate, wherein the dry matter comprises at least 55 wt-% of protein, at least 5 wt-% of starch, and less than 0.5 wt-% of raffinose, stachyose and verbascose, of the total weight of the dry matter of the wet pulse protein concentrate.

## Description

### TECHNICAL FIELD

The present disclosure generally relates to a pulse plant protein concentrate and a method of preparing thereof. The disclosure relates particularly, though not exclusively, to a process for producing a wet pulse protein concentrate from pulse plant seeds, a wet pulse protein concentrate, and its use in foodstuff applications.

### BACKGROUND

This section illustrates useful background information without admission of any technique described herein representative of the state of the art.

Presently, there is a growing demand for novel type of dairy alternatives and dairy-free cheese alternatives. The major challenge in the dairy alternatives and vegan cheese industry is to design and develop safe products with high nutritional quality, functional properties, and with a taste and texture that meet the consumer expectations. For example, most commercial vegan cheese analogues on the market consist of water, coconut oil, starch, stabilizers, salt, flavouring and colouring agents. The starch component used in the dairy alternatives is typically a combination of native and modified potato- and/or corn starch. Oil- and starch-based cheese analogues are nutritionally disadvantageous and have often chalky or plastic-like texture. Also, the taste properties of such products are usually considered as unpleasant. Moreover, the protein content of currently marketed vegan and vegetarian cheeses is very low, falling far below the protein content of the dairy cheeses.

Therefore, there is a growing need for dairy alternatives and vegan cheeses, with an increased protein content, preferably comparable to dairy cheeses. Furthermore, there is a growing need for dairy alternatives and vegan cheeses, having improved taste and texture properties.

Plant based protein raw materials commonly used with dairy alternatives and vegan cheese products are soybean, wheat and with lesser extent, pea, and fava bean. Pulses, including for example, pea, fava bean, chickpea, and mung bean, are rich sources of protein, vitamins, minerals, and carbohydrates. However, pulses contain naturally a variety of antinutritional factors which limit their food use as such, without pre-treatments. Among these antinutritional factors are, for example, phytate, certain α-Galactosides, phenolics, and pyrimide glycosides, such as faba bean vicine and convicine.To reduce the adverse factors in pulse seeds, pulse proteins used in food industry are produced by either dry or wet fractionation method, leading to protein concentrates or protein isolates, respectively.

The dry fractionation means air classification / dry extraction, and it is used for production of pulse protein concentrates. Air classification is a processing technique that separates light from heavy particles in pulse flour by using a stream of air. Pulse concentrates have lower protein content than isolates, but functional properties of the protein are usually better as proteins are harvested closer to their natural form. The high content of protein (20 to 30 wt-%) and starch (40 to 50 wt-%) and naturally low lipid content of pulse seeds offers the possibility to fractionate and concentrate these main components, yielding concentrates high in protein. Pulse seeds are first optionally dehulled, then milled to a fine flour with appropriate particle size to allow the separation of protein bodies (storage structures containing protein aggregates) from starch granules. Flour is air classified into a coarse fraction comprising most of the starch, and to a fine fraction, comprising the pulse proteins, and making up the dry fractionated protein concentrate. The resulting pulse protein concentrate is high in protein content but many of the unwanted antinutritional factors, such as α-galactosides, phytic acid and faba bean pyrimidine glycosides accumulate in the concentrate reducing the pulse concentrate quality. Small size starch granules and fiber particles are carried by the air current to same fraction than protein and contaminate and limit maximal protein content. Complete starch removal using air classification is not possible because smallest starch granules have size and weight close to size of protein particles. Currently the methods used for removing said antinutritional factors from the concentrate, such as ultrafiltration, are too expensive, increasing the price of the product to unfeasible level. Moreover, taste-, antinutritional and colour properties of such dry fractionated protein concentrate are also commonly poor, limiting the use of the product.

Protein isolates are prepared by wet fractionation. Although the protein content of wet extracted and thereafter dried protein isolates is high, the protein functionality is limited because of several potentially denaturing process steps needed in preparation of protein isolate. During the wet extraction of pulse protein, pulse seeds are first dehulled and milled to a flour, and then dispersed with an aqueous solution. Solutions dissolve dry storage proteins. However, dissolved proteins are prone to denaturation caused by physical or chemical stress, such as changes of pH or temperature, high shear mixing and salt content.

Only about 20-30 wt-% of pulse seed flour dry weight is proteins, whereas 70-80 wt-% of pulse seed flour dry weight is solid material comprising starch and fiber, which are removed from the protein in wet fractionation process. After removal of solid material, dissolved protein is precipitated. Precipitation also denatures protein. In addition, not all proteins are dissolved and therefore are discarded with a solid fraction. Commonly used isoelectric precipitation is based on denaturation and isoelectric charge of proteins. Precipitated protein is separated from liquid and dried. Drying also denatures protein. Spray drying is considered best alternative for large scale economical method. However, machinery for spray drying significantly increase investment cost and production cost and have adverse effect for protein functionality. Drying is also an unnecessary step if protein is used as wet form for applications like vegan dairy alternatives.

Therefore, improved methods for producing concentrated pulse protein materials are needed, wherein the protein functionality and nutritional value of the resulting pulse protein is preserved, or preferably improved. Furthermore, more resource efficient methods for producing pulse protein, leading to improved organoleptic properties of the pulse protein materials are needed.

### SUMMARY

The appended claims define the scope of protection. Any examples and technical descriptions of apparatuses, products and/or methods in the description and/or drawings not covered by the claims are presented not as embodiments of the invention but as background art or examples useful for understanding the invention.

According to a first example aspect there is provided a wet pulse protein concentrate, comprising: 55 - 80 wt-% of moisture, and 20 - 45 wt-% of dry matter, of the total weight of the wet pulse protein concentrate, wherein the dry matter comprises at least 55 wt-% of protein, at least 5 wt-% of starch, and less than 0.5 wt-% of raffinose, stachyose and verbascose, of the total weight of the dry matter of the wet pulse protein concentrate.

The present wet pulse protein concentrate of the first aspect is advantageous as it comprises a high pulse protein concentration with a good functionality and excellent organoleptic properties.

The wet pulse protein concentrate is advantageous as it comprises a low wt-% of antinutritional factors. The wet pulse protein concentrate is advantageous as it comprises increased protein and nutritionally advantageous insoluble fiber, and increased starch content, compared to air classified protein concentrate thereby having an improved nutritional value. Moreover, the pulse proteins comprised by the wet pulse protein concentrate, have excellent solubility. The wet pulse protein concentrate is advantageous also due to neutral taste properties, i.e., the absence of undesired pulse-like side taste. Because the protein comprised by the wet pulse protein concentrate is not obtained by dissolving, precipitation or drying it also retains optimal functionality.

According to a second example aspect there is provided a process for producing a wet pulse protein concentrate, the process comprising:
(i) providing dehulled pulse seeds;
(ii) grinding the dehulled pulse seeds, thereby obtaining a pulse seed powder;
(iii) exposing the pulse seed powder to air classification, thereby obtaining an air classified pulse protein concentrate comprising at least 45 wt-% of protein from the total weight of the air classified pulse protein concentrate;
(iv) dispersing the air classified pulse protein concentrate into a first aqueous solution having a pH 3.5 - 5.5, thereby obtaining a first pulse protein slurry;
(v) centrifuging the first pulse protein slurry and recovering a first solid pulse protein fraction;
(vi) dispersing the first solid pulse protein fraction into a second aqueous solution having a pH 3.5 - 5.5, thereby obtaining a second pulse protein slurry; and
(vii) centrifuging the second pulse protein slurry, and recovering a second solid pulse protein fraction,
thereby obtaining the wet pulse protein concentrate.

The use of the air classified pulse protein concentrates in the process for producing a wet pulse protein concentrate of the second aspect is advantageous as this leads to high final pulse protein concentration of the wet pulse protein concentrate. The present process for producing a wet pulse protein concentrate of the second aspect is advantageous, as the process allows production of a wet pulse protein concentrate with a high pulse protein content with low protein yield losses.

The present process for producing a wet pulse protein concentrate of the second aspect is advantageous, as the process allows production of a wet pulse protein concentrate comprising lower wt-% amount of antinutritional factors (ANFs), the final product thereby having good nutritional properties. The present process is further advantageous, as in acidic aqueous solution protein bodies are not solubilized but separated from liquid fraction containing soluble ANFs by centrifugation to solid fraction. Further, waste streams of the process are minimized, as the removed waste fraction comprises only of soluble components like ANFs.

The wet pulse protein concentrate also has improved organoleptic properties as adverse colour, taste, aroma, and flavour substances are removed in the production process.

Moreover, the use of the air classified pulse protein concentrates in the process as a protein source for producing a wet pulse protein concentrate of the second aspect is advantageous as the required process volumes of the pulse protein slurries are smaller because of high protein content. Washing effect is improved as the quantity of liquid used to wash a given pulse protein fraction is increased. Lower process volumes lead to, for example, lower investment cost for the smaller machinery, reduced energy consumption and industry space requirements and to simplified infrastructure and process. The present process is further advantageous, as the resulting wet pulse protein concentrate is a wet product, thereby avoiding use of energy needed for drying the pulse protein concentrate. Production a wet pulse protein concentrate without drying is advantageous because of high investment cost of drying machinery, for example the spray dryer system. Drying consumes energy and water.

According to a third example aspect there is provided a use of the wet pulse protein concentrate of the first aspect in foodstuff preparation and/or in a food application, preferably in preparation of fermented plant-based dairy alternatives.

The present use of the wet pulse protein concentrate of the first aspect in foodstuff preparation and/or in a food application is advantageous, as the wet pulse protein concentrate does not require further processing, like rehydration prior to its use, but it can be used directly. Moreover, for many food applications it is not necessary to remove all starch and fiber, like in protein isolate process do. For many food applications additional starch and/or fiber is not needed, when using the wet pulse protein concentrate, but the starch and/or fiber comprised by the wet pulse protein concentrate are adequate.

The wet pulse protein concentrate is advantageous to use in foodstuff as it is soluble and functional. Also, the use of present wet pulse protein concentrate is advantageous, for example, in manufacturing plant-based dairy alternatives because it improves the protein content, nutritional value, such as fiber content, colour lightness, and taste of such products.

The wet pulse protein concentrate is advantageous to use in foodstuff as the wet pulse protein concentrate comprises fiber, and hence, there is no need to add additional insoluble fiber for many food applications. Fiber particle size in the wet pulse protein concentrate is very fine because of air classification. Fine structure of fiber is advantageous as it has high functionality, binding capacity to oil and water and smooth mouthfeel.

According to a fourth example aspect there is provided a foodstuff product comprising the wet pulse protein concentrate of the first aspect. The present foodstuff product comprising the wet pulse protein concentrate of the first aspect is advantageous because of the good nutritional value of the wet pulse protein concentrate and high content of protein.

Different non-binding example aspects and embodiments have been illustrated in the foregoing. The embodiments in the foregoing are used merely to explain selected aspects or steps that may be utilized in different implementations. Some embodiments may be presented only with reference to certain example aspects. It should be appreciated that corresponding embodiments may apply to other example aspects as well.

### BRIEF DESCRIPTION OF THE FIGURES

Some example embodiments will be described with reference to the accompanying figures, in which:

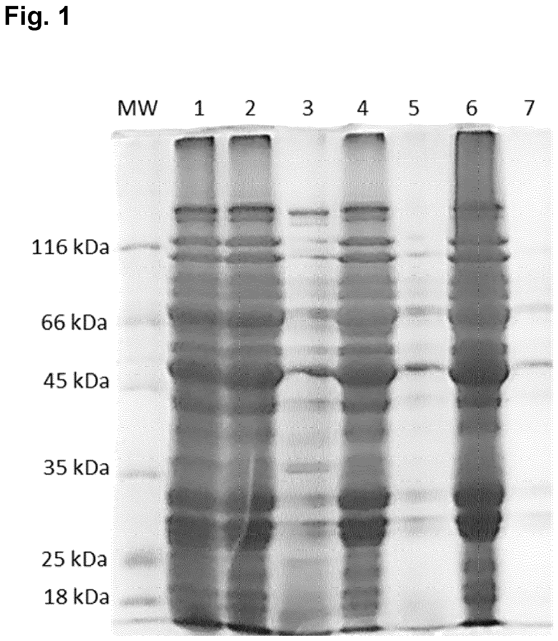

Fig. 1 shows an SDS-PAGE analysis of samples collected at different time points from a process for producing a wet pulse protein concentrate. The samples were prepared from air classified *Vicia faba* (faba bean) and *Pisum sativum* (pea) protein concentrates, mixed in ratio 2:1 (w/w), respectively. The numbered sample lanes indicate: 1) a first pulse protein slurry, prior to any centrifugation steps; 2) a first solid pulse protein fraction, after a first centrifugation D1; 3) a liquid fraction separated from the first solid pulse protein fraction after the first centrifugation D1; 4) a second solid pulse protein fraction, after a second centrifugation D2; 5) a liquid fraction separated from the second solid pulse protein fraction after the second centrifugation D2; 6) a third solid pulse protein fraction, after a third centrifugation D3; 7) a liquid fraction separated from the third solid pulse protein fraction after the third centrifugation D3. The molecular weights (kDa) of the molecular weight (MW) standard (Thermo Scientific 26610) bands are indicated on the left.

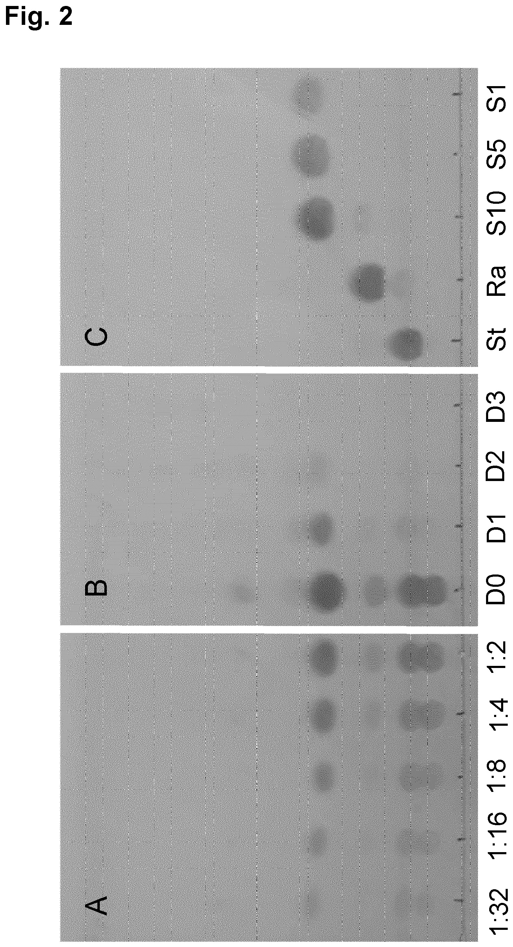

Fig. 2 shows Thin Layer Chromatography (TLC) based analysis of α-galactosides, from samples collected at different time points from the process for producing a wet pulse protein concentrate. Commercial (Sigma-Aldrich) di- tri- and tetrasaccharides were used as standards. The samples were prepared from respective pulse protein slurries after centrifugation steps D1, D2, D3, and from air classified *Vicia faba* (faba bean) protein concentrate (D0), used for production of the wet pulse protein concentrate. Samples were normalized on the basis of dry weight. The sample panels indicate: A) dilution series of air classified *Vicia faba* protein concentrate (D0), including the indicated dilutions 1:32; 1:16; 1:8; 1:4; and 1:2; B) air classified *Vicia faba* protein concentrate (D0), and solid pulse protein fraction samples collected after first centrifugation (D1), second centrifugation (D2) and third centrifugation (D3), showing the reduction of oligosaccharides after each washing and centrifugation step; C) oligosaccharide standards stachyose 10 µg (St), raffinose 10 µg (Ra), saccharose 10 µg (S10), saccharose 5 µg (S5), and saccharose 1 µg (S1).

### DETAILED DESCRIPTION

As used herein, the term "pulse" or "pulse seed" or "pulse grains" refers to edible seed of the legume family (*Fabaceae*)*.* Pulse seeds are strictly harvested for their seed, such as dried beans, lentils and peas , which are very high in starch, protein and fiber, and low in fat.As used herein, the term "pulse" therefore also includes seeds of dried peas *(Pisum sativum)* and dry beans *(Phaseolus vulgaris) but* excludes the seeds which are harvested and consumed green (i.e., not dried prior to use), such as green peas *(Pisum sativum),* and green beans *(Phaseolus vulgaris),* which are classified as vegetable crops. As used herein, the term "pulse" does not include oil seeds, i.e., seeds used mostly for oil extraction, such as soybean *(Glycine max)* or groundnuts *(Arachis hypogaea).*

As used herein, the term "protein functionality" refers to the technical functional properties of a protein or protein comprising material, such as, gelation, solubility, swelling, emulsification, water and fat binding capacity, and/or foaming properties that are advantageous in foodstuff production and in certain foodstuff applications. Functional properties of a protein influence the protein behaviour during the interactions with other proteins, lipids, carbohydrates, water, ions and flavours present within the food mixtures. The functional properties are affected by protein source, processing conditions such as temperature, ionic strength, pH and protein concentration in the food mixture.

As used herein, the term "protein solubility" refers to the amount of protein in a sample that dissolves into solution. Proteins used in food applications can be partially or completely soluble or completely insoluble in water. Factors influencing protein solubility include amino acid composition, protein molecular weight, protein conformation, content of polar/ nonpolar groups in surface amino acids and the pH of the medium. Protein solubility in pH suitable for food use is important in several applications. For example, soluble protein in drink applications is smooth and dispersible, without sandy mouthfeel or sedimentation of the protein particles.

As used herein, "emulsifying properties" of protein comprising material such as protein concentrates are characterized as emulsifying ability or activity and emulsion stability of indicated materials. Emulsions are systems composed of immiscible but dispersed liquids which are stabilized by emulsifiers, i.e., compounds which form interface films and thus prevent the disperse phases from flowing together. Functional proteins as surface-active and amphiphilic compounds can be used as emulsifying agents in food production.

Emulsifying is needed in applications in which the homogenous oil-water dispersion is important for the structure of the food product, like cheeses, mayonnaises, and puddings.

As used herein the term "organoleptic properties" of a protein comprising material refers to colour, taste, aroma, and flavour qualities of said material.

As used herein the term "wet" in context of wet pulse protein concentrate refers to the fact that the wet pulse protein concentrate comprises moisture, i.e., it is not dry.

As used herein, the term "moisture" refers to water.

As used herein, the term "dry matter" refers to the dry matter remaining when moisture i.e., water comprised by a composition is completely removed, for example by evaporation. The dry matter comprised by a composition consists of all its constituents excluding water.

As used herein the term "dehulling" in context of pulse seeds refers to a process of removing the hulls or seed coat from seeds, thereby providing a dehulled pulse seed.

As used herein the term "air classification" or "dry fractionation" refers to production of protein concentrate by milling seeds into a fine flour with appropriate particle size to allow separation of protein containing fraction from starch granules, the separation being based on, for example, size, shape, or density of the components present in the fractions in question, or combinations thereof. The flour is then classified into the coarse fraction comprising major part of starch granules and to the fine fraction comprising the enriched proteins and making up the protein concentrate. As used herein the term "pulse protein concentrate" refers to pulse protein concentrate obtained through air classification.

As used herein the term "slurry" refers to a mixture of denser insoluble solids suspended in a liquid, wherein the liquid part may or may not comprise solubilized components. A slurry can refer to a mixture of a liquid and a pulse protein concentrate, wherein said pulse proteins are not solubilized in the liquid, but present as protein aggregates, precipitate or as protein bodies within the liquid.

As used herein the term "α-galactosides" refers to raffinose family of oligosaccharides (RFOs). RFOs are α-galactosyl derivatives of sucrose, contain α-galactosidic bonds, and are soluble in aqueous solutions. α-galactosides include, but are not limited to, raffinose, stachyose and verbascose.

As used herein, the term "phytic acid" refers to myo-Inositol hexakisphosphate (IP6), also known as phytic acid (PA) or phytin, which is a hexaphosphoric ester of cyclohexane. Phytic acid naturally occurs in legumes at high levels and is known to form insoluble complexes with divalent cations such as iron, zinc and calcium that cannot be dissociated for absorption within the small intestine and particularly the duodenum, the site where most elemental absorption occurs. In legumes phytic acid is eventually distributed throughout the dicotyledonous legume seed.

As used herein the term "anti nutritional factors" or antinutrients refers to components present in pulse seeds that can reduce nutrient utilization, e.g., absorption, or food uptake, and/or can lead to impaired gastrointestinal function and metabolic performance.

As used herein the term "protein isolate" refers to a protein isolate prepared by wet fractionation. More specifically, protein isolate is prepared by dehulling and milling seeds to flour, followed by dispersion into an aqueous liquid. The protein is dissolved in the liquid and separated from the waste solids comprising starch and fiber by centrifugation or filtration. Protein is then precipitated from the liquid and harvested by centrifugation or filtration. Thereafter the protein is optionally washed, neutralized and dried.

As used herein the term "weak acid" refers to an acid that partially dissociates into its ions in an aqueous solution or water.

As used herein the term "strong acid" refers to an acid that fully dissociates into its ions in in an aqueous solution or water.

As used herein the term "oil seed" refers to seeds used mostly for oil extraction, such as soybean (*Glycine max*)*,* groundnuts (*Arachis hypogaea*) or rapeseed (*Brassica napus*)*.* Cultivated soybean seeds have an oil content of approximately 18-22 wt-%, whereas wild soybean seeds contain about 8-10 wt-% oil. Starch content in mature soybean seeds is very low (0.19-0.91 wt-%). Oil of the oilseeds must be removed, for example by hexane washing or by pressing before dry extraction of protein because high oil content prevents forming of free-flowing fine flour, the removal of which reduces protein functionality and/or increases protein denaturation. Defatting requires specific machinery and in case of hexane extraction, also hexane recycling system is needed.

As used herein the term "washing" or "washing step" refers to the steps of the current process for producing a wet pulse protein concentrate, wherein either the air classified pulse protein concentrate in the step (iv), the first solid pulse protein fraction in the step (vi), or the second solid pulse protein fraction from an optional step (viii) is dispersed with a respective aqueous solution having a pH 3.5 - 5.5 and washed for a duration of time. As used herein the term "first washing step" refers to a step (iv) of the current process for producing a wet pulse protein concentrate. As used herein the term "second washing step" refers to a step (vi) of the current process for producing a wet pulse protein concentrate. As used herein the term "third washing step" refers to an optional step (viii) of the process for producing a wet pulse protein concentrate.

As used herein, with a dispersion or mixing ratio of 1:3 (w/w) is meant dispersing 1 part of first substance to 3 parts of second substance, wherein the parts are measured by mass.

As used herein the term "food grade" refers to material which is non-toxic and safe for human consumption or permitted to come in contact with food.

As used herein the term "foodstuff" refers to a material that is used as a food or used for preparing food.

As used herein the term "food application" refers to an industrial process for making food or semi-finished product that can be used for making food. Food application means also finished products such as, but not being limited to, cheese, bread, drink, mayonnaise, meat alternative or vegan whipped cream alternative.

As used herein, the wt-% of dry matter from a composition is measured by weighting an accurate amount of fresh sample, removing the moisture from the fresh sample by oven-drying at 110°C overnight, weighting an accurate amount of dry sample and calculating the percentage of dry sample from the fresh sample. Weight measurements can be done using accurate analytical balance.

As used herein, the wt-% amount of RFO's/α-Galactosides raffinose, stachyose and/or verbascose in the wet pulse protein concentrate is measured using HPLC based method (outsourced service by Natural Resources Institute Finland).

As used herein, the wt-% amount of starch in the wet pulse protein concentrate and in dry matter is measured by Megazyme total starch kit using the kit instructions for determination of starch in cereal and food products not containing resistant starch.

As used herein, the wt-% amount of pyrimidine glycosides vicine and convicine are measured as outsourced service by Natural Resources Institute Finland, using an in-house method "Determination of vicine and convicine in faba beans by HPLC-DAD", based on the method described by Gutierrez et al. (2006).

As used herein, the term "comprising" includes the broader meanings of "including", "containing" and "comprehending", as well as the narrower expressions "consisting of" and "consisting only of". As used herein "

Herein is disclosed a wet pulse protein concentrate, having an improved nutritional composition and food grade quality.

In an embodiment, the wet pulse protein concentrate comprises 55 - 80 wt-% of moisture and 20 - 45 wt-% of dry matter, of the total weight of the wet pulse protein concentrate, wherein the dry matter comprises at least 55 wt-% of protein, at least 5 wt-% of starch, and less than 0.5 wt-% of raffinose, stachyose and verbascose, of the total weight of the dry matter of the wet pulse protein concentrate.

In an embodiment, the wet pulse protein concentrate comprises 30 - 40 wt-%, or 30 - 35 wt-% of dry matter. In an embodiment, the dry matter comprised by the wet pulse protein concentrate means the dry matter remaining when the moisture comprised by the wet pulse protein concentrate is completely removed, for example by evaporation. In an embodiment, the dry matter comprised by the wet pulse protein concentrate consists of all its constituents excluding water.

In an embodiment, the wet pulse protein concentrate comprises 55 - 80 wt-% of moisture, and 20 - 45 wt-% of dry matter, of the total weight of the wet pulse protein concentrate; wherein the dry matter comprises at least 55 wt-% of protein, at least 5 wt-% of starch, and less than 0.5 wt-% of α-galactosides, of the total weight of the dry matter of the wet pulse protein concentrate.

In an embodiment, the dry matter of the wet pulse protein concentrate comprises at least 55 wt-% of protein. In an embodiment, the dry matter of the wet pulse protein concentrate comprises at least 5 wt-% of starch. In an embodiment, the dry matter of the wet pulse protein concentrate comprises less than 0.5 wt-% of raffinose, stachyose and verbascose.

In an embodiment, the wet pulse protein concentrate is a dough-like wet protein paste, suitable for use in food applications as it is, without the need for further purification. In an embodiment, the wet pulse protein concentrate is obtainable with the method of the second aspect.

In an embodiment, the wet pulse protein concentrate comprises 60 - 70 wt-%, or 65 - 70 wt-% of moisture. In an embodiment, the wet pulse protein concentrate comprises weak food grade acid, strong food grade acid, one or more food grade process aids, or any combination thereof. In an embodiment, the weak food grade acid, strong food grade acid, and/or one or more food grade process aids in the wet pulse protein concentrate are traces remaining from the process of producing the wet pulse protein concentrate. In an embodiment, the weak food grade acid, strong food grade acid, and/or one or more food grade process aids in the wet pulse protein concentrate are added after the production process of the wet pulse protein concentrate.

In an embodiment, the pulse species of the wet pulse protein concentrate is selected from the seeds of the legume family (Fabaceae) including *Pisum sativum* seeds, *Vicia faba* seeds, *Cicer arietinum* seeds, *Vigna radiata* seeds, or combinations thereof. In an embodiment, the pulse species of the wet pulse protein concentrate comprises a mixture of more than one pulse species, or alternatively, consists solely of one pulse species. In an embodiment, the pulse species of the wet pulse protein concentrate do not include oil seeds, i.e., seeds used mostly for oil extraction, such as soybean *(Glycine max)* or groundnuts (Arachis hypogaea).

In an embodiment, the pulse of the wet pulse protein concentrate is selected from *Phaseolus vulgaris, Phaseolus lunatus, Vigna angularis, Vigna radiata, Vigna mungo, Phaseolus coccineus, Vigna umbellate, Vigna acontifolia, Phaseolus acutifolius, Vicia faba equina, Vicia faba, Pisum sativum var. sativum, Pisum sativum var. arvense, Cicer arietinum, Vigna unguiculata, Cajanus cajan, Lens culinaris, Vigna subterranean, Vicia sativa, Lupinus spp., Lablab purpureus, Canavalia ensiformis, Canavalia gladiate, Psophocarpus teragonolobus,* or combinations thereof.

In an embodiment, the pulse of the wet pulse protein concentrate is selected from *Pisum sativum, Vicia faba, Cicer arietinum, Vigna radiata,* or combinations thereof, preferably the pulse is *Pisum sativum, Vicia faba,* or combinations thereof. In an embodiment, the wet pulse protein concentrate comprises pea (*Pisum sativum*) protein. In an embodiment, the wet pulse protein concentrate comprising pea (*Pisum sativum*) protein is beneficial because of the excellent nutritive value of pea proteins. Moreover, pea protein is a beneficial choice for the wet pulse protein concentrate as pea protein contains all nine essential amino acids, of the nine essential amino acids pea protein being particularly high in leucine, isoleucine and valine. Pea protein is also beneficial as it comprises high amounts of iron and arginine. The pea seeds comprise typically 21-30 wt-% of protein, 60 wt-% of starch and dietary fiber, and 1-2 wt-% of fat.

In an embodiment, the wet pulse protein concentrate comprises faba bean (*Vicia faba*) protein. In an embodiment, the wet pulse protein concentrate comprising faba bean protein is beneficial as the faba bean has a high protein content, which also relates to technical advantage in protein production. In an embodiment, the wet pulse protein concentrate comprises chickpea (*Cicer arietinum*) protein. In an embodiment, the wet pulse protein concentrate comprises mung bean (*Vigna radiata*) protein.

In an embodiment, the wet pulse protein concentrate comprises: 55 - 85 wt-%, 60 - 85 wt-%, or 70 - 85 wt-% of protein from the total weight of the dry matter of the wet pulse protein concentrate; at least 7 wt-%, or at least 10 wt-% of starch from the total weight of the dry matter of the wet pulse protein concentrate; or any combination thereof.

In an embodiment, the protein amount comprised by the wet pulse protein concentrate depends on the specific pulse seed or combination of different pulse seeds, from which the wet pulse protein concentrate is made of. In an embodiment, the pulse protein comprised by the wet pulse protein concentrate is not added protein, but protein originally present in the pulse seeds from which the wet pulse protein concentrate is made of. In an embodiment, the wet pulse protein concentrate comprises at least 55 wt-%, at least 60 wt-%, at least 65 wt-%, at least 70 wt-%, at least 75 wt-%, or at least 80 wt-%, but at most 85 wt-% of protein from the total weight of the dry matter of the wet pulse protein concentrate. In an embodiment, the wet pulse protein concentrate comprises 55 - 85 wt-%, 60 - 85 wt-%, 65 - 85 wt-%, 70 - 85 wt-% or 70 - 80 wt-% of protein from the total weight of the dry matter of the wet pulse protein concentrate. In an embodiment, the wet pulse protein concentrate is wet faba bean protein concentrate, and it comprises 65 - 85 wt-%, preferably 67 - 73 wt-% of protein from the total weight of the dry matter of the wet faba bean protein concentrate.

In an embodiment, the pulse protein comprised by the wet pulse protein concentrate comprises its natural functional properties, such as, gelation-, solubility-, emulsification-, water and fat binding capacity, and/or foaming, i.e., the functional characteristics of the pulse protein remain unchanged or are altered only minimally during the production process of the wet pulse protein concentrate. In an embodiment, the pulse protein comprised by the wet pulse protein concentrate has a solubility of at least 60%.

In an embodiment, the amount of starch comprised by the wet pulse protein concentrate depends on the specific pulse seed or combination of different pulse seeds, from which the wet pulse protein concentrate is made of. In an embodiment, the starch comprised by the wet pulse protein concentrate is not added starch, but starch originally present in the pulse seeds from which the wet pulse protein concentrate is made of. In an embodiment, the wet pulse protein concentrate comprises 5-20 wt-%, or 7 - 15 wt-%, or 7 - 11 wt-% of starch from the total weight of the dry matter of the wet pulse protein concentrate. In such embodiment, the starch comprised by the wet pulse protein concentrate is a result of the current process for producing the wet pulse protein concentrate, without any efforts trying to remove starch. In an embodiment, the wet pulse protein concentrate comprises at least 5 wt-%, at least 6 wt-%, at least 7 wt-%, at least 8 wt-%, at least 9 wt-%, at least 10 wt-%, at least 11 wt-%, at least 12 wt-%, at least 13 wt-%, at least 14 wt-% or at least 15 wt-% of starch from the total weight of the dry matter of the wet pulse protein concentrate. In an embodiment, the wet pulse protein concentrate is wet faba bean protein concentrate, and it comprises 5-11 wt-% of starch from the total weight of the dry matter of the wet faba bean protein concentrate. In an embodiment, the wet pulse protein concentrate is obtained via the current process for producing a wet pulse protein concentrate, wherein the process comprises an amylase enzyme treatment, and the wet pulse protein concentrate thereby comprises 5 - 7 wt-% of starch from the total weight of the dry matter of the wet pulse protein concentrate. In an alternative embodiment, wherein the wet pulse protein concentrate is obtained via the current process for producing a wet pulse protein concentrate comprising an amylase enzyme treatment, the wet pulse protein concentrate may comprise 4 - 7 wt-%, 3 - 7 wt-%, 2 - 7 wt-%, or even 1 - 7 wt-% of starch from the total weight of the dry matter of the wet pulse protein concentrate. In an embodiment, the amylase enzyme treatment reduces the starch content of the resulting wet pulse protein concentrate. Therefore, in such embodiment, the dry matter of the wet pulse protein concentrate comprises at least 55 wt-% of protein, at least 1 wt-% of starch and less than 0.5 wt-% of raffinose, stachyose and verbascose. In an embodiment, the wet pulse protein concentrate obtained via a process comprising an amylase enzyme treatment comprises 55 - 80 wt-% of moisture, and 20 - 45 wt-% of dry matter, of the total weight of the wet pulse protein concentrate, wherein the dry matter comprises at least 55 wt-% of protein, at least 1 wt-% of starch, and less than 0.5 wt-% of raffinose, stachyose and verbascose, of the total weight of the dry matter of the wet pulse protein concentrate.

The wet pulse protein concentrate also comprises insoluble fiber, increasing its nutritional value and contributing to good gut health and glucose absorption. Insoluble fiber is an indigestible carbohydrate that is poorly dissolved in water. Insoluble fibers found in our diet include cellulose, hemicellulose and lignins. In an embodiment, the amount of fiber comprised by the wet pulse protein concentrate depends on the specific pulse seed or combination of different pulse seeds, from which the wet pulse protein concentrate is made of. In an embodiment, the fiber comprised by the wet pulse protein concentrate is not added fiber, but fiber originally present in the pulse seeds from which the wet pulse protein concentrate is made of. In an embodiment, the wet pulse protein concentrate comprises 10-20 wt-%, or 12-18 wt-%, or 14-18 wt-% of fiber, from the total weight of the dry matter of the wet pulse protein concentrate. In an embodiment, the wet pulse protein concentrate is wet faba bean protein concentrate, and it comprises 12-18 wt-% of fiber from the total weight of the dry matter of the wet faba bean protein concentrate.

The wet pulse protein concentrate comprising said amounts of starch and fiber is advantageous, as these components add to the nutritional value of the wet pulse protein concentrate. Therefore, in an embodiment, adding additional starch and fiber to products wherein the wet pulse protein concentrate is utilised is not necessary, or the need for additional starch and fiber is considerably lowered.

In an embodiment, the wet pulse protein concentrate is suitable to be used in food applications as it is, without a need for further removal antinutritional factors. In an embodiment, the antinutritional factors are selected from phytic acid, α-Galactosides such as raffinose, stachyose and verbascose, phenolics, pyrimidine glycosides vicine and convicine, or combinations thereof.

In an embodiment, the wet pulse protein concentrate comprises very low or undetectable amounts of water-soluble α-Galactosides (raffinose family of oligosaccharides (RFOs)). In an embodiment, the water-soluble α-Galactosides are practically absent in the wet pulse protein concentrate due to the production process of the wet pulse protein concentrate. Therefore, no additional processing steps for removal of the α-Galactosides, preferably raffinose, stachyose and verbascose, from the wet pulse protein concentrate are required.

In an embodiment, said very low amount of α-Galactosides raffinose, stachyose and verbascose is less than 0.5 wt-% of the dry matter of the wet pulse protein concentrate. In an embodiment, the wet pulse protein concentrate comprises less than 0.5 wt-% of raffinose, stachyose and/or verbascose of the total weight of the dry matter of the wet pulse protein concentrate. In an embodiment, the dry matter of the wet pulse protein concentrate comprises less than 0.5 wt-% of α-Galactosides raffinose, stachyose and verbascose combined. In an embodiment, the dry matter of the wet pulse protein concentrate comprises less than 0.4 wt-%, preferably less than 0.3 wt-%, more preferably less than 0.2 wt-%, most preferably less than 0.1 wt-% of α-Galactosides raffinose, stachyose and verbascose combined.

In an embodiment, the wet pulse protein concentrate comprises less than 0.5 wt-%, preferably less than 0.2 wt-% of raffinose of the dry matter of the wet pulse protein concentrate; less than 0.5 wt-%, preferably less than 0.2 wt-% of stachyose of the dry matter of the wet pulse protein concentrate; less than 0.5 wt-%, preferably less than 0.2 wt-% of verbascose of the dry matter of the wet pulse protein concentrate; or any combination thereof.

In an embodiment, the wet pulse protein concentrate comprises less than 0.5 wt-%, preferably less than 0.4 wt-%, more preferably less than 0.3 wt-%, even more preferably less than 0.2 wt-%, most preferably less than 0.1 wt-% of raffinose of the dry matter of the wet pulse protein concentrate. In an embodiment, the wet pulse protein concentrate comprises less than 0.5 wt-%, preferably less than 0.4 wt-%, more preferably less than 0.3 wt-%, even more preferably less than 0.2 wt-%, most preferably less than 0.1 wt-% of stachyose of the dry matter of the wet pulse protein concentrate. In an embodiment, the wet pulse protein concentrate comprises less than 0.5 wt-%, preferably less than 0.4 wt-%, more preferably less than 0.3 wt-%, even more preferably less than 0.2 wt-%, most preferably less than 0.1 wt-% of verbascose of the dry matter of the wet pulse protein concentrate.

In an embodiment, the wet pulse protein concentrate comprises undetectable amount of each of the α-Galactosides raffinose, stachyose and verbascose. In an embodiment undetectable amount means such a low wt-%, that the used detection methods cannot detect the α-Galactoside in question.

In an embodiment, the specific amount of each of raffinose, stachyose and verbascose comprised by the wet pulse protein concentrate, depends on the specific pulse seed or combination of different pulse seeds, from which the wet pulse protein concentrate is made of. For example, the predominant α-Galactoside from said raffinose, stachyose and verbascose in faba beans (*Vicia faba*) is verbascose, whereas raffinose is present in minor amounts in faba beans. Therefore, in an exemplary embodiment, the wet pulse protein concentrate made from faba beans can comprise detectable, but very low amounts of verbascose, , but no detectable amounts of raffinose. The amounts of all water-soluble α-Galactosides, specifically raffinose, stachyose and verbascose, in the wet pulse protein concentrate is significantly reduced from the amount present in the initial pulse seeds or combination of different pulse seeds.

α-Galactosides raffinose, stachyose and verbascose are known FODMAP (Fermentable oligo- di- and mono-saccharides and polyols) components, and can cause abdominal discomfort and other problems associated with digestive system. The very low or undetectable amounts of water-soluble α-Galactosides raffinose, stachyose and verbascose is beneficial, as the wet pulse protein concentrate is suitable to be used in food applications as it is, including in FODMAP-low applications, without a need for further removal of raffinose, stachyose and verbascose.

In an embodiment, the wet pulse protein concentrate comprises less than 2 wt-%, preferably less than 1.5 wt-% of phytic acid of the total weight of the dry matter of the wet pulse protein concentrate.

In an embodiment, the wet pulse protein concentrate comprises less than 2.0 wt-%, preferably less than 1.7 wt-%, more preferably less than 1.5 wt-%, even more preferably less than 1 wt-% of phytic acid. In an embodiment, the wet pulse protein concentrate comprises even less than 0.7 wt-%, or less than 0.4 wt-% of phytic acid of the total weight of the dry matter of the wet pulse protein concentrate.

In an embodiment, phytic acid is about 50 wt-% soluble at pH 3.5 - 5.5, and therefore, phytic acid content can be reduced by washing steps at this pH range efficiently. In an embodiment, phytic acid accumulates more than two-fold into air classified pulse protein concentrates, when compared to phytic acid content in the dehulled seeds.

In an embodiment, a very low amounts of phytic acid, such as less than 2 wt-%, or less than 1.5 wt-%, in the wet pulse protein concentrate is beneficial, when the wet pulse protein concentrate is used in foodstuff preparation and/or in a food application.

Especially faba beans comprise pyrimidine glycosides vicine and convicine, which are stored in cotydelons of faba beans usually at levels around 1-5 wt-% of the dry matter depending on cultivar and cultivation conditions. Presence of vicine and/or convicine potentially causes acute haemolytic anemia, favism, in individuals having a genetic disorder glucose-6-phosphate dehydrogenase (G6PD) deficiency. Thermal processing like boiling, roasting, microwaving, or frying can reduce but not entirely eliminate vicine and convicine from faba bean seeds or other pulse protein concentrates, due to thermostability. In the air-classified pulse protein concentrates, vicine and convicine concentrate up to nearly fourfold in the air-classified protein fraction, when compared to the wt-% content in the pulse seeds.

In an embodiment, the current wet pulse protein concentrate comprises very low or undetectable amounts of water-soluble pyrimidine glycosides convicine and vicine. The pyrimidine glycosides convicine and vicine are mostly found in faba beans (*Vicia faba*)*.* In an embodiment, the wet pulse protein concentrate comprising very low or undetectable amounts of convicine and vicine, is most preferably wet faba bean protein concentrate.

In an embodiment, the wet pulse protein concentrate comprises less than 800 mg/kg, preferably less than 400 mg/kg, more preferably less than 200 mg/kg, even more preferably less than 100 mg/kg of convicine and vicine.

In an embodiment, the wet pulse protein concentrate comprises less than 800 mg/kg, preferably less than 400 mg/kg, more preferably less than 200 mg/kg, even more preferably less than 100 mg/kg of convicine and vicine, from the total (wet) weight of the wet pulse protein concentrate. In an embodiment, the wet pulse protein concentrate comprises 300 mg/kg or less, preferably 200 mg/kg or less, more preferably 100 mg/kg or less, even more preferably 50 mg/kg or less, most preferably 40 mg/kg or less of convicine and vicine, from the total (wet) weight of the wet pulse protein concentrate. A very low or undetectable amounts of convicine and vicine in the wet pulse protein concentrate is beneficial, as the wet pulse protein concentrate is suitable to be used in the diet of patients with a genetic disorder glucose-6-phosphate dehydrogenase deficiency (G6PD deficiency). Therefore, in an embodiment, the wet pulse protein concentrate is suitable to be used in food applications as it is, including food applications for patients with a G6PD deficiency, without a need for further removal of convicine and vicine.

In an embodiment, the wet pulse protein concentrate comprises reduced amount of water soluble phenolics, such as phenolic acids, tannins and flavonoids, when compared to the respective air classified pulse protein concentrate. Phenolic compounds cause a bitter taste. Therefore, a very low or undetectable amounts of phenolic acid in the wet pulse protein concentrate is beneficial when the wet pulse protein concentrate is used in foodstuff preparation and/or in a food application.

In an embodiment, the low amount of α-galactosides, pyrimidine glycosides, phytic acid, and/or phenolics in the wet pulse protein concentrate are due to the specific production process of the wet pulse protein concentrate. Therefore, no additional processing steps for removal of these antinutritional components from the wet pulse protein concentrate are required.

In an embodiment, the current wet pulse protein concentrate is obtainable from a process for producing a wet pulse protein concentrate. In an embodiment, a process for producing a wet pulse protein concentrate comprises: (i) providing dehulled pulse seeds; (ii) grinding the dehulled pulse seeds, thereby obtaining a pulse seed powder; (iii) exposing the pulse seed powder to air classification, thereby obtaining an air classified pulse protein concentrate comprising at least 45 wt-% of protein from the total weight of the air classified pulse protein concentrate; (iv) dispersing the air classified pulse protein concentrate into a first aqueous solution having a pH 3.5 - 5.5, thereby obtaining a first pulse protein slurry; (v) centrifuging the first pulse protein slurry and recovering a first solid pulse protein fraction; (vi) dispersing the first solid pulse protein fraction into a second aqueous solution having a pH 3.5 - 5.5, thereby obtaining a second pulse protein slurry; and (vii) centrifuging the second pulse protein slurry, and recovering a second solid pulse protein fraction, thereby obtaining the wet pulse protein concentrate.

In an embodiment, many known antinutritional factors are removed from the pulse seeds along with the seed coat in dehulling. In an embodiment, most phenolics compounds, like phenolic acids, tannins and flavonoids, are removed in dehulling. In an embodiment, dehulled pulse seeds are essentially without the hull, although fractions of the seed coat can remain in the dehulled pulse seeds.

In an embodiment, the step (i) of the process for producing a wet pulse protein concentrate comprises providing dehulled pulse seeds. In an embodiment, the step (ii) of the process for producing a wet pulse protein concentrate comprises grinding the dehulled pulse seeds, thereby obtaining a pulse seed powder. In an embodiment, the step (iii) of the process for producing a wet pulse protein concentrate comprises exposing the pulse seed powder to air classification, thereby obtaining an air classified pulse protein concentrate comprising at least 45 wt-% of protein from the total weight of the air classified pulse protein concentrate. In an embodiment, the step (iv) of the process for producing a wet pulse protein concentrate comprises dispersing the air classified pulse protein concentrate into a first aqueous solution having a pH 3.5 - 5.5, thereby obtaining a first pulse protein slurry. In an embodiment, the step (v) of the process for producing a wet pulse protein concentrate comprises centrifuging the first pulse protein slurry and recovering a first solid pulse protein fraction. In an embodiment, the step (vi) of the process for producing a wet pulse protein concentrate comprises dispersing the first solid pulse protein fraction into a second aqueous solution having a pH 3.5 - 5.5, thereby obtaining a second pulse protein slurry. In an embodiment, the step (vii) of the process for producing a wet pulse protein concentrate comprises centrifuging the second pulse protein slurry, and recovering a second solid pulse protein fraction, thereby obtaining the wet pulse protein concentrate.

In an embodiment, the dehulled pulse seeds comprise: 15 - 40 wt-% or 17 - 35 wt-% of pulse protein, from the total weight of the dehulled pulse seeds; at least 22 wt-%, at least 40 wt-%, or at least 50 wt-% of starch, from the total weight of the dehulled pulse seeds; less than 7 wt-%, less than 5 wt-%, less than 3 wt-%, less than 2 wt-%, or less than 1 wt-% of fats, from the total weight of the dehulled pulse seeds; more than 20 g/kg, or more than 60 g/kg of at least one of raffinose, stachyose, and verbascose, from the total weight of the dehulled pulse seeds; more than 2 g/kg, more than 10 g/kg of at least one of convicine and vicine, from the total weight of the dehulled pulse seeds; or any combination thereof.

In an embodiment, the dehulled pulse seeds comprise 15 - 40 wt-% or 17 - 35 wt-% of pulse protein, from the total weight of the dehulled pulse seeds.

In an embodiment, the dehulled pulse seeds comprise at least 22 wt-%, at least 40 wt-%, or at least 50 wt-% of starch, from the total weight of the dehulled pulse seeds.

In an embodiment, the dehulled pulse seeds comprise less than 7 wt-%, less than 5 wt-%, less than 3 wt-%, less than 2 wt-%, or less than 1 wt-% of fats, from the total weight of the dehulled pulse seeds. In an embodiment, a low oil content of the dehulled pulse seeds is beneficial, as oil comprised by the pulse seeds can cause agglomeration and aggregate formation during the consequent air classification step. Hence, oil seeds such as soybeans, having high oil content, are unsuitable for air classification. In an embodiment, the dehulled pulse seeds are not dehulled oil seeds.

In an embodiment, the dehulled pulse seeds comprise more than 5 g/kg, or more than 10 g/kg of at least one of raffinose, stachyose, and verbascose, from the total weight of the dehulled pulse seeds. In a preferred embodiment, the dehulled pulse seeds comprise more than 30 g/kg of raffinose, stachyose, and verbascose combined, from the total weight of the dehulled pulse seeds. In an embodiment, the present process for producing a wet pulse protein concentrate is especially beneficial in removing α-Galactosides comprised by the dehulled pulse seeds. Hence, pulse seeds having detectable or even relatively high levels of α-Galactosides raffinose, stachyose and/or verbascose can be utilised in the current process, wherein the resulting wet pulse protein concentrate the levels of said raffinose, stachyose and/or verbascose are significantly reduced or undetectable.

In an embodiment, the dehulled pulse seeds comprise more than 2 g/kg, or more than 10 g/kg of at least one of convicine and vicine, from the total weight of the dehulled pulse seeds. In a preferred embodiment, the dehulled pulse seeds comprise more than 5 g/kg of convicine and vicine combined, from the total weight of the dehulled pulse seeds. In an embodiment, the present process for producing a wet pulse protein concentrate is especially beneficial in removing convicine and/or vicine comprised by the dehulled pulse seeds. Hence, pulse seeds having detectable or even relatively high levels of convicine and/or vicine can be utilised in the current process, wherein the resulting wet pulse protein concentrate the levels of said convicine and/or vicine are significantly reduced or undetectable.

In an embodiment, the pulse seeds used in the process comprise a mixture of more than one pulse seed species, or alternatively, consists solely of one pulse seed species. In an embodiment, the pulse seed species do not include oil seeds, i.e., seeds used mostly for oil extraction, such as soybean *(Glycine max)* or groundnuts *(Arachis hypogaea).* In an embodiment, the pulse seeds used in the process contain low level of oil, so that the pulse seeds can be milled to fine flour and air classified without defatting.

In an embodiment, the dehulled pulse seeds are *Pisum sativum* seeds, *Vicia faba* seeds, *Cicer arietinum* seeds, *Vigna radiata* seeds, or combinations thereof; preferably the dehulled seeds are *Pisum sativum* seeds, *Vicia faba* seeds, or combinations thereof.

In an embodiment, the dehulled pulse seeds used in the process for producing a wet pulse protein concentrate are *Pisum sativum* seeds. In an embodiment, the dehulled pulse seeds used in the process for producing a wet pulse protein concentrate are *Vicia faba* seeds.

In an embodiment, the grinding of the dehulled pulse seeds of the step (ii) comprises milling the pulse seeds into pulse seed flour. In an embodiment, with the pulse seed powder is meant pulse seed flour. In an embodiment, the pulse seed powder comprises a particle size allowing the separation of protein fraction from starch granules at the step (iii).

In an embodiment, exposing the pulse seed powder to air classification in the step (iii) comprises separation of the pulse seed powder into two fractions based on particle size and weight, comprising fine fraction and a coarse fraction. In an embodiment, the coarse fraction comprises mostly starch. In an embodiment the fine fraction, comprising majority of the pulse protein comprised by the pulse seeds, is the air classified pulse protein concentrate. In an embodiment, the fine fraction of the pulse seed powder has typically a particle size of from 1 µm up to 20-30 µm.

In an embodiment, the air classified pulse protein concentrate is dry fractionated protein concentrate. In an embodiment, the air classified pulse protein concentrate is air classified pulse protein flour concentrate.

In an embodiment, the protein content of the air classified pulse protein concentrate obtained at the step (iii) is at least 45 wt-%, from the total weight of the air classified pulse protein concentrate. In an embodiment, the protein content of the air classified pulse protein concentrate obtained at the step (iii) is at least 125 wt-%, preferably at least 150 wt-% higher than the protein content of the dehulled pulse seeds (from the total weight of the dehulled pulse seeds).

In an embodiment, the air classified pulse protein concentrate obtained at the step (iii) comprises:
- at least 45 wt-%, preferably at least 50 wt-% of protein, of the total weight of the air classified pulse protein concentrate;
- at least 5 wt-% of starch, of the total weight of the air classified pulse protein concentrate;
- less than 7 wt-% of fats, of the total weight of the air classified pulse protein concentrate;
- more than 1 wt-% of at least one of raffinose, stachyose, and verbascose, of the total weight of the air classified pulse protein concentrate;
- more than 0.2 wt-% of of convicine and vicine, of the total weight of the air classified pulse protein concentrate;
- more than 2 wt-% of phytic acid, or
- any combination thereof.

In an embodiment, the air classified pulse protein concentrate obtained at the step (iii) comprises at least 45 wt-%, preferably at least 50 wt-% of protein, of the total weight of the air classified pulse protein concentrate. In an embodiment, the air classified pulse protein concentrate comprises 40 - 70 wt-%, 50 - 65 wt-%, or 50 - 60 wt-% of protein, of the total weight of the air classified pulse protein concentrate.

In an embodiment, the air classified pulse protein concentrate obtained at the step (iii) comprises at least at least 5 wt-% of starch, of the total weight of the air classified pulse protein concentrate. In an embodiment, the air classified pulse protein concentrate obtained at the step (iii) comprises 5 - 20 wt-% of starch, of the total weight of the air classified pulse protein concentrate.

In an embodiment, the air classified pulse protein concentrate obtained at the step (iii) comprises less than 7 wt-% wt-% of fats, of the total weight of the air classified pulse protein concentrate. In an embodiment, the air classified pulse protein concentrate obtained at the step (iii) comprises 1-7 wt-% of fats of the total weight of the air classified pulse protein concentrate.

In an embodiment, the air classified pulse protein concentrate obtained at the step (iii) comprises antinutritional factors selected from phytates, α-Galactosides raffinose, stachyose and verbascose, phenolics, pyrimidine glycosides vicine and convicine, or combinations thereof. In an embodiment, the wt-% amount of some antinutritional factors comprised by the air classified pulse protein concentrate is higher than the wt-% amount of these antinutritional factors comprised by the dehulled pulse seeds at the step (i). In an exemplary embodiment, the amount α-Galactosides selected from raffinose, stachyose and verbascose, and/or pyrimidine glycosides selected from vicine and convicine is at least 3 g/kg, preferably at least 5 g/kg higher in the air classified pulse protein concentrate, than in the dehulled pulse seeds. Hence, in an embodiment, some of the antinutritional factors are concentrated in the in the air classified pulse protein concentrate. In an embodiment, the amount of some antinutritional factors comprised by the air classified pulse protein concentrate are comparable or the same as the amount of these antinutritional factors comprised by the dehulled pulse seeds at the step (i).

In an embodiment, the air classified pulse protein concentrate obtained at the step (iii) comprises more than 1 wt-% of at least one of raffinose, stachyose, and verbascose, of the total weight of the air classified pulse protein concentrate. In an embodiment, the air classified pulse protein concentrate obtained at the step (iii) comprises 1 - 10 wt-% of at least one of raffinose, stachyose, and verbascose, of the total weight of the air classified pulse protein concentrate.

In an embodiment, the air classified pulse protein concentrate obtained at the step (iii) comprises more than 2 g/kg of at least one of convicine and vicine, of the total weight of the air classified pulse protein concentrate. In an embodiment, the air classified pulse protein concentrate obtained at the step (iii) comprises 2-10 g/kg of at least one of convicine and vicine, of the total weight of the air classified pulse protein concentrate. In an embodiment, at least two washing steps are needed to decrease pyrimidine glycosides to a safe level below 0.4 g/kg. In an embodiment, air classified faba bean protein concentrate comprises 10 g/kg (w/w) of pyrimidine glycosides, which can be reduced to 0.2 g/kg (w/w) in the process for producing a wet pulse protein concentrate comprising two washes.

In an embodiment, utilising the air classified pulse protein concentrate in the consequent washing and centrifugation steps (iv) - (vii) is beneficial, as the resulting wet pulse protein concentrate obtainable from the process comprises a higher protein concentration, than a protein concentrate obtainable from a pulse seed powder with the same process without the air classification step (iii). In an embodiment, the high concentration of protein in the air classified pulse protein concentrate, enables smaller processing volumes in the steps (iv)-(vii) of the process for producing a wet pulse protein concentrate, leading to energy saving, to simplified infrastructure, and to decreased need for industry space. In an embodiment, the wet pulse protein concentrate with an adequate purity is obtained with the process for producing a wet pulse protein concentrate comprising two separate washing steps. In other embodiments, the process for producing a wet pulse protein concentrate must comprise three separate washing steps, for obtaining adequate purity of the wet pulse protein concentrate.

In an embodiment, the process for producing a wet pulse protein concentrate comprises two separate washing steps with an aqueous solution having a pH 3.5 - 5.5, for obtaining the wet pulse protein concentrate with improved purity.

In an embodiment, the first washing step comprises dispersing the air classified pulse protein concentrate into the first aqueous solution having a pH 3.5 - 5.5, thereby obtaining the first pulse protein slurry, in the step (iv). In an embodiment, the second washing step comprises dispersing the first solid pulse protein fraction into the second aqueous solution having a pH 3.5 - 5.5, thereby obtaining the second pulse protein slurry, in the step (vi).

In an embodiment, the dispersion of the step (iv) and/or (vi) comprises preventing pulse proteins of the air classified pulse protein concentrate and/or the first solid pulse protein fraction from solubilizing into the aqueous solution. In an embodiment, dispersing the first solid washed pulse protein slurry fraction into a second aqueous solution is beneficial as the second washing step further removes antinutritional components present in the first solid pulse protein fraction.

In some applications, a high starch content of the wet pulse protein concentrate reduces protein gelling strength. The starch particles are insoluble and therefore sediment in a liquid application (e.g., a drink) made with the wet pulse protein concentrate. Therefore, in some embodiments, it is useful to further reduce the amount of starch in the wet pulse protein concentrate.

In an embodiment the process for producing a wet pulse protein concentrate comprises adding amylase enzyme to the first pulse protein slurry at the step (iv), thereby increasing the protein content and decreasing the starch content of the wet pulse protein concentrate.

In an embodiment the process for producing a wet pulse protein concentrate comprises adding amylase enzyme at a concentration effective to reduce starch content of the first pulse protein slurry and thereby the wet pulse protein concentrate by 50-75 wt-% within one hour reaction time.

In an embodiment, it is beneficial to further reduce starch content of the wet pulse protein concentrate thereby also increasing the percentual pulse protein content of the wet pulse protein concentrate. In an embodiment, the starch content can be decreased by adding amylase enzyme at the step (iv). Amylase enzymes are glycoside hydrolases that act α-1,4-glycosidic bond on starch cleaving starch chain to smaller water-soluble fragments that can be removed to liquid fraction.

In an embodiment, the amylase enzyme used for this purpose preferably functions in temperatures below 75 °C, preferably below 65 °C, more preferably below 55 °C, and in acidic pH of 3.5 - 5.5.

In an exemplary embodiment, reducing the starch content with amylase enzyme treatment results in a faba bean wet pulse protein concentrate having protein content of 70 -80 wt-% of the total weight of the dry matter of the wet pulse protein concentrate. In an embodiment, the amylase enzyme can be added to any one of the washing steps first washing step, the second washing step, or optionally to a third washing step, thereby decreasing the phytic acid content of the wet pulse protein concentrate. In an embodiment, the amylase enzyme can be added to more than one washing step.

In an embodiment the process for producing a wet pulse protein concentrate comprises adding phytase enzyme to the first pulse protein slurry at the step (iv), thereby decreasing the phytic acid content of the wet pulse protein concentrate. Phytases are high molecular weight enzymes that catalyze the hydrolysis of phytic acid into myo-inositol phosphate intermediates. In an embodiment, the phytase enzyme can be added to any of the washing steps first washing step, the second washing step, or the third washing step, thereby decreasing the phytic acid content of the wet pulse protein concentrate.

In an embodiment, the process for producing a wet pulse protein concentrate comprises three separate washing steps with an aqueous solution having a pH 3.5 - 5.5, for obtaining the wet pulse protein concentrate with further improved purity.

In an embodiment, the process for producing a wet pulse protein concentrate comprising the steps: (viii) dispersing the second solid pulse protein fraction into a third aqueous solution having a pH 3.5 - 5.5, thereby obtaining a third pulse protein slurry; and (ix) centrifuging the third pulse protein slurry, and recovering a third solid pulse protein fraction, thereby obtaining the wet pulse protein concentrate.

In an embodiment, the third washing step comprises dispersing the second solid pulse protein fraction into the second aqueous solution having a pH 3.5 - 5.5, thereby obtaining the third pulse protein slurry, in the step (viii).

In an embodiment, dispersing the second solid washed pulse protein slurry fraction from the step (vii) into a third aqueous solution is beneficial as the third washing step removes any residual antinutritional components and adverse organoleptic factors, like color and bitter compounds, thereby further increasing the purity of the wet pulse protein concentrate. In an embodiment, the process for producing a wet pulse protein concentrate comprises three separate washing steps, if the second solid pulse protein fraction still comprises detectable or too high levels of selected antinutritional component(s).

In an embodiment, the process for producing a wet pulse protein concentrate comprises: (i) providing dehulled pulse seeds; (ii) grinding the dehulled pulse seeds, thereby obtaining a pulse seed powder; (iii)exposing the pulse seed powder to air classification, thereby obtaining an air classified pulse protein concentrate comprising at least 45 wt-% of protein from the total weight of the air classified pulse protein concentrate; (iv) dispersing the air classified pulse protein concentrate into a first aqueous solution having a pH 3.5 - 5.5, thereby obtaining a first pulse protein slurry; (v) centrifuging the first pulse protein slurry and recovering a first solid pulse protein fraction; (vi) dispersing the first solid pulse protein fraction into a second aqueous solution having a pH 3.5 - 5.5, thereby obtaining a second pulse protein slurry; (vii) centrifuging the second pulse protein slurry, and recovering a second solid pulse protein fraction; (viii) dispersing the second solid pulse protein fraction into a third aqueous solution having a pH 3.5 - 5.5, thereby obtaining a third pulse protein slurry; and (ix) centrifuging the third pulse protein slurry, and recovering a third solid pulse protein fraction; thereby obtaining the wet pulse protein concentrate.

In an embodiment, antinutritional factors comprised by the air classified pulse protein concentrate are removed in each washing step of the process, for producing a wet pulse protein concentrate.

In an embodiment, the first solid pulse protein fraction comprises at least 80 wt-% less of convicine and/or vicine than the air classified pulse protein concentrate; and/or the second solid pulse protein fraction comprises at least 96 wt-% less of convicine and/or vicine, than the air classified pulse protein concentrate; and/or the third solid pulse protein fraction comprises at least 99 wt-% less of convicine and/or vicine, than the air classified pulse protein concentrate.

In an embodiment, the first solid pulse protein fraction comprises at least 80 wt-% less of convicine and/or vicine, than the air classified pulse protein concentrate.

In an embodiment, the second solid pulse protein fraction comprises at least 96 wt-% less of convicine and/or vicine, than the air classified pulse protein concentrate.

In an embodiment, the third solid pulse protein fraction comprises at least 99 wt-% less of convicine and/or vicine, than the air classified pulse protein concentrate.

In an embodiment, the first solid pulse protein fraction comprises at least 80 wt-% less of raffinose, stachyose and/or verbascose than the air classified pulse protein concentrate. In an embodiment, the second solid pulse protein fraction comprises at least 96 wt-% less of raffinose, stachyose and/or verbascose, than the air classified pulse protein concentrate. In an embodiment, the third solid pulse protein fraction comprises at least 99 wt-% less of raffinose, stachyose and/or verbascose, than the air classified pulse protein concentrate.

Therefore, in an embodiment, the current process for producing a wet pulse protein concentrate efficiently removes ANFs, such as α-galactosides, pyrimidine glycosides including vicine and convicine, phytic acid and further optionally reduces remaining starch content of air classified pulse protein concentrate.

In an embodiment, the process for producing a wet pulse protein concentrate comprises more than three separate washing steps with an aqueous solution having a pH 3.5 - 5.5, for obtaining the wet pulse protein concentrate with improved purity.

In an embodiment, the step iv) of the process comprises dispersing the air classified pulse protein concentrate into the aqueous solution in a ratio from 1:3 to 1:20 (w/w). In an embodiment, the step (iv) comprises dispersing the air classified pulse protein concentrate into the first aqueous solution in a ratio of 1:3 1:4, 1:5, 1:6, 1:7, 1:8, 1:9, 1:10, 1:11, 1:12, 1:13, 1:14, 1:15, 1:16, 1:17, 1:18, 1:19 or 1:20 (w/w). In an embodiment, the step (iv) comprises dispersing 1 kg of the air classified pulse protein concentrate into 3-20 kg of the first aqueous solution. Preferably, the step (iv) of the process comprises dispersing the air classified pulse protein concentrate into the first aqueous solution in a ratio of less than 1:15, to prevent the volume of the first pulse protein slurry increasing very high. Preferably, the step (iv) of the process comprises dispersing the air classified pulse protein concentrate into the first aqueous solution in a ratio from 1:7 to 1:12.

In an embodiment, the step (vi) of the process comprises dispersing the first solid pulse protein fraction into the second aqueous solution in ratio from 1:3 to 1:20 (w/w). In an embodiment, the step (vi) comprises dispersing the first solid pulse protein fraction into the second aqueous solution in a ratio of 1:3, 1:4, 1:5, 1:6, 1:7, 1:8, 1:9, 1:10, 1:11, 1:12, 1:13, 1:14, 1:15, 1:16, 1:17, 1:18, 1:19 or 1:20 (w/w). Preferably, the step (vi) of the process comprises dispersing the first solid pulse protein fraction into the second aqueous solution in a ratio from 1:7 to 1:12.

In an embodiment, the step (viii) of the process comprises dispersing the second solid pulse protein fraction into the third aqueous solution in ratio from 1:3 to 1:20 (w/w). In an embodiment, the step (viii) comprises dispersing the second solid pulse protein fraction into the third aqueous solution in a ratio of 1:3,1:4, 1:5, 1:6, 1:7, 1:8, 1:9, 1:10, 1:11, 1:12, 1:13, 1:14, 1:15, 1:16, 1:17, 1:18, 1:19 or 1:20 (w/w). Preferably, the step (viii) of the process comprises dispersing the second solid pulse protein fraction into the third aqueous solution in a ratio of 1:7 to 1:12.

In an embodiment, the upper limit of the dispersion ratio of the air classified pulse protein concentrate and the first aqueous solution, is limited by the size and/or capacity and economical use of the equipment used, the same being true for any consequent washing step of the process. In an embodiment, the lower limit of the dispersion ratio of the air classified pulse protein concentrate and the first aqueous solution, is limited by adequate removal of the antinutritional factors and adverse organoleptic factors comprised by the air classified pulse protein concentrate, the same being true for any consequent washing step of the process.

In an embodiment, the first and/or second and/or third aqueous solutions are independently selected from an aqueous solution comprising weak food grade acid, such as lactic acid; an aqueous solution comprising strong food grade acid such as sulfuric acid; an aqueous solution comprising one or more food grade process aids, such as disodium calcium EDTA, polyvinyl pyrrolidone or antifoaming agent; and any combination thereof.

In an embodiment, the first and/or the second and/or the third aqueous solutions adjust the pH of the respective first, second and/or third pulse protein slurry to a pH 3.5 - 5.5.

In an embodiment, the first and/or the second and/or the third aqueous solution comprises the weak and/or strong food grade acid. In an embodiment, the pH of the first and/or the second and/or the third aqueous solution is adjusted to a pH 3.5 - 5.5 with the weak and/or strong food grade acid.

In an embodiment, the weak food grade acid is lactic acid, citric acid, acetic acid, phosphoric acid, or combinations thereof. In an embodiment, the wet pulse protein concentrate comprises lactic acid. In an embodiment, the wet pulse protein concentrate comprises strong food grade acid, which is sulfuric acid or hydrochloric acid. In an embodiment, the wet pulse protein concentrate comprising sulfuric acid is beneficial, as food grade sulfuric acid or hydrochloric acid is odourless and an efficient food preservative.

In an embodiment, the food grade process aids include disodium calcium EDTA, polyvinyl pyrrolidone, antifoaming agent, or combinations thereof. In an embodiment, the wet pulse protein concentrate comprises 0.1-1.0 mM of disodium calcium EDTA, 0.005 - 0.01 wt-% polyvinyl pyrrolidone and/or 0.001 - 0.01wt-% antifoaming agent. In an embodiment the wet pulse protein concentrate comprising disodium calcium EDTA is beneficial, as it preserves well the flavour, colour and texture of the wet pulse protein concentrate.

In an embodiment the process for producing a wet pulse protein concentrate comprises adding polyvinyl pyrrolidone to the first pulse protein slurry at the step (iv), thereby decreasing the phenolic compound content of the wet pulse protein concentrate. In an embodiment, to reduce phenolic compounds, polyvinyl pyrrolidone can be added to dispersion of step (iv) at concentration of 0.05 wt-% to 1.0 wt-%, from the total weigh of the first pulse protein slurry. In an embodiment, to reduce phenolic compounds, polyvinyl pyrrolidone can be added also to other dispersion step (vi) and/or (viii).

In an embodiment, the first and/or the second aqueous solution comprises a weak food grade acid, disodium calcium EDTA, polyvinyl pyrrolidone and antifoaming agent. It is beneficial to add disodium calcium EDTA and polyvinyl pyrrolidone in first washing step as these bind and remove soluble unwanted compounds to the liquid fraction in the first centrifugation step. In the subsequent washing steps these processing aids are left out or used in lower concentration, to minimize the amount of these processing aids in the final wet pulse protein concentrate. In an embodiment the first and/or the second aqueous solution comprises 1-20 mM of disodium calcium EDTA. In an embodiment, the calcium disodium EDTA in the washing steps is configured to preserve texture, flavour and/or colour, and to increase the shelf life of the wet pulse protein concentrate. In an embodiment, polyvinyl pyrrolidone added in the washing steps improves organoleptic properties, flavour and/or colour of wet pulse protein concentrate. In an embodiment, the antifoam agent is configured to prevent excess foaming of said aqueous solution. In an embodiment, the first and/or the second and/or the third aqueous solution is water or pH adjusted water.

In an embodiment, the third washing step is identical to the second washing step.

In a preferable embodiment, the first aqueous solution comprises a weak food grade acid, disodium calcium EDTA, polyvinyl pyrrolidone and antifoaming agent, the second aqueous solution is water and optionally the third aqueous solution is water.

In an embodiment, the pulse protein slurry of any one of the steps iv) - ix) of the process for producing a wet pulse protein concentrate has a temperature of 4 - 80 °C, preferably the temperature is 50 °C; and/or a pH 3.5 - 5.5, preferably the pH is 4.8.

In an embodiment, the first and/or second and/or third aqueous solution is pre-heated prior to dispersing in the air classified pulse protein or the first solid pulse protein fraction, respectively. In an embodiment, the aqueous solutions used in the washing steps of the process are all pre-heated. In an embodiment, the aqueous solutions used in the washing steps of the process are pre-heated to 30 - 65 °C, preferably to 50-60 °C. In an embodiment, the pulse protein slurry of any one of the steps iv) - ix) of the process for producing a wet pulse protein concentrate has a temperature of 30 - 65 °C, preferably 50 - 60 °C.

In an embodiment, the pulse protein slurry of any one of steps (iv)-(vii) and/or the steps (iv)-(ix) having a temperature of 4 - 80 °C is beneficial as within this temperature range starch comprised by the pulse protein slurry remains in non-gelatinated form. In an embodiment, at the temperature of 4 - 80 °C the pulse proteins are not denatured, or only minimally denatured. In an embodiment, the pulse protein slurry of any one of steps (iv)-(vii) and/or the steps (iv)-(ix) preferably has a temperature above 4 °C, to improve solubilisation of the antinutritional factors, such as phytic acids, raffinose family of oligosaccharides, phenolics, and/or pyrimidine glycosides.

In an embodiment, the pulse protein slurry of any one of steps (iv)-(vii) and/or the steps (iv)-(ix) having a pH 3.5 - 5.5 is beneficial as within this pH range the pulse protein comprised by the pulse protein slurry is not solubilized. In an embodiment, pulse proteins remain insoluble in a solid fraction during washing at pH 3.5 - 5.5. In pH over 5.5, the pulse protein pods and/or crystals within the pulse protein slurry start to solubilize into the liquid, thereby significantly reducing the yield of the final pulse protein concentrate.

In an embodiment, the pulse protein slurry of the steps (iv) and/or (vi) and/or (viii) is mixed for 10 - 90 min, preferably 15 - 30 min. In an embodiment, the respective pulse protein slurries are heated during mixing.

In an embodiment, the centrifuging of the step (v) and/or the step (vii) and/or the step (ix) takes place at a temperature of 4 - 80 °C, preferably temperature of 30 - 65 °C, more preferably temperature of 50 - 60 °C.

In an embodiment, the second solid pulse protein slurry of the step (viii) is treated similarly as the first solid pulse protein slurry of the step (vi), i.e., the second and third washing steps are the same. In an embodiment, the first pulse protein slurry of the step (v) is treated similarly as the second pulse protein slurry of the step (vii), i.e., all centrifugation steps are the same. In an embodiment, the third pulse protein slurry of the step (ix) is treated similarly as the first and second pulse protein slurries of the steps (vi) and (vii), i.e., all centrifugation steps are the same.

In an embodiment, the process for producing a wet pulse protein concentrate comprises obtaining the wet pulse protein concentrate having the composition of the wet pulse protein concentrate of the first aspect.

In an embodiment, no pulse protein comprised by the air classified pulse protein concentrate is lost in the washing steps of the process for producing a wet pulse protein concentrate. In an embodiment, the wet pulse protein concentrate obtained from the process comprises at least 70 wt-% of the pulse protein comprised by the air classified pulse protein concentrate. In an embodiment, the protein content of the wet pulse protein concentrate obtained from the process is at least 5 wt-%, preferably at least 10 wt-% higher than the protein content of the air classified pulse protein concentrate calculated from the total dry weight.

In an embodiment, a major part of the pulse protein remains insolubilized during the entire process for producing a wet pulse protein concentrate thereby preventing yield losses of protein.

In an embodiment, only substantially liquid waste fractions are produced in the washing steps of the process for producing a wet pulse protein concentrate, the liquid waste fractions comprising the unwanted antinutritional factors. In an embodiment, the liquid waste fractions are the liquid fractions removed at the process steps (v) and (vii) and optionally at the step (ix).

In an embodiment the wet pulse protein concentrate obtained from the process comprises significantly less colorants, has more neutral smell and has an improved taste, when compared to air classified pulse protein concentrate without the consequent washing and centrifugation steps according to the current process.

In an embodiment, no additional starch and/or fiber must be added to the wet pulse protein concentrate if used in foodstuff preparation and/or in a food application. In an embodiment, the starch and fiber comprised by the wet pulse protein concentrate are utilized directly in product applications of the wet pulse protein concentrate.

In an embodiment, no additional processing steps for removal of the antinutritional factors from the wet pulse protein concentrate are required, but the wet pulse protein concentrate can directly be utilized in foodstuff preparation and/or in a food application.

In an embodiment, no additional processing steps for removal of the α-Galactosides raffinose, stachyose and verbascose from the wet pulse protein concentrate are required, but the wet pulse protein concentrate can directly be utilized in foodstuff preparation and/or in a food application.

In an embodiment, the air classified pulse protein concentrate can be used as such, or dried before using it. In an embodiment, the wet pulse protein concentrate has very good emulsifying ability and gelling capacity, and therefore it is suitable to be used in applications requiring high emulsifying capacity of a protein contrate, such as plant-based dairy alternative applications.

In an embodiment, the wet pulse protein concentrate is used in foodstuff preparation and/or in a food application, preferably in preparation of fermented plant-based dairy alternatives.

In an embodiment, the wet pulse protein concentrate is used in preparation of foods comprising emulsified gels, such as preparation of cheese, drinks, spreads, yoghurt, and ice cream. In an embodiment, the wet pulse protein concentrate is used in preparation of cheese analogues and/or cheese alternatives and/or vegan cheeses.

In an embodiment, the wet pulse protein concentrate is used in combination with another plant protein concentrate, in foodstuff preparation and/or in a food application.

In an embodiment, the wet pulse protein concentrate is used in high moisture extrusion to make textured vegetable proteins for meat or seafood alternatives. High moisture extrusion is a process technology used in preparing texturized meat substitutes and textured vegetable proteins (TVP). In an embodiment, the starch and fiber content, as well as the high water binding capacity of the wet pulse protein concentrate are beneficial in high moisture extrusion.

In an embodiment, the wet pulse protein concentrate is used in preparation of fermented foodstuff. In an embodiment, microbial fermentation changes organoleptic properties and the structure of the foodstuff..

In an embodiment, the wet pulse protein concentrate is used in in baked goods due to its egg-like proterties.

In an embodiment is disclosed a foodstuff product comprising the wet pulse protein concentrate. In an embodiment, the foodstuff is selected from a soft cheese, semihard cheese, hard cheese, salad cheese (hard or soft), halloumi type cheese, BBQ cheese, mold cheese (white or blue), cheese spread, cream cheese, yoghurt drink, cheese dip, yoghurt, ice cream, mayonnaise, and vegan egg product. In an embodiment, the foodstuff is a salad cheese and no additional starch is needed for making the salad cheese. In an embodiment, the foodstuff is a white mould cheese or a semihard cheese.

### EXAMPLES

### Example 1: Production of wet pulse protein concentrate from a mixture of air classified faba bean and pea protein concentrates

Air classified faba bean- and pea protein concentrates containing 55% wt-% and 65 wt-% protein were mixed with 2:1 ratio (w/w) respectively (2 parts of faba bean concentrate, 1 part of pea concentrate), resulting in an air classified pulse flour concentrate mixture. A 10x weight (w/w) of pre-heated aqueous solution comprising 1.5 g/L of disodium calcium EDTA, 0.25% lactic acid and 0.15% antifoaming agent was added to the pulse flour mixture and stirred with paddle mixer. A first pulse protein slurry with pH ~4.8 and temperature ~50°C was obtained. Mixing was continued 20 min before proceeding to the centrifugation steps.

The centrifugation steps were made with Lemitec MD80 laboratory size decanter centrifuge with centrifugal force of 3000 X G, to separate solid and liquid phase. The first pulse protein slurry was then centrifuged (centrifugation D1), and a first solid pulse protein fraction was collected and liquid phase containing major part of soluble antinutritional factors like pyrimidine glycosides and oligosaccharides was discarded. The first solid pulse protein fraction was resuspended to 10x weight of 50°C water, mixed with paddle mixer and pH adjusted to pH 5.0 using lactic acid, centrifuged as described above (centrifugation D2) and resulting second solid pulse protein fraction was collected. The second solid pulse protein fraction was washed with water once more as before, and centrifuged (centrifugation D3), resulting in total of three rounds of centrifugations (D1, D2, D3). After the third centrifugation step, a third solid pulse protein fraction was collected as ready-to-use wet pulse protein concentrate.

Samples were collected throughout the process, to verify that protein is not lost during the washing steps and to demonstrate the good quality of the pulse protein as intact and non-degraded form. Samples were analyzed as such in 12% SDS-PAGE gel, according to routine molecular biology methodology. Reducing loading dye with β-mercaptoethanol was used. Results are presented in figure 1.

The nutritional composition of wet pulse protein concentrate, made of air classified faba bean- and pea protein concentrates as described above, was measured (by Eurofins Scientific analytical services), and the results are presented in table 1. Dry matter, moisture, fat, protein, ash and carbohydrates are presented as wt-%:s from the total weight of the wet pulse protein concentrate (on a wet basis) and also as calculated proportional to dry matter (on a dry basis).

**Table 1. Nutritional composition of a wet pulse protein concentrate obtained from air classified faba bean- and pea protein concentrates.**

| Nutritional composition of a wet pulse protein concentrate (faba bean/pea) | | |
|---|---|---|
| Substance name | wt-% from the total weight of wet pulse concentrate | wt-% as proportional to dry matter |
| Dry matter (calculated) | 33.4 | 100 |
| Moisture | 66.6 | 0 |
| Fat | 2.0 | 6.0 |
| Protein | 22.6 | 67.8 |
| Ash | 0.7 | 2.1 |
| Carbohydrates (calculated) | 8.1 | 24.3 |
| Energy content | 141 kcal/100 g | 423 kcal/100 g |

### Example 2: Analysis of pyrimidine glycosides vicine and convicine from the wet protein concentrate

As pyrimidine glycosides in faba bean derived products is a known to be potentially toxic for individuals having a genetic disorder glucose-6-phosphate dehydrogenase deficiency, we analyzed vicine / convicine concentrations from dehulled faba bean flour, from the air classified faba bean protein concentrate used as a raw material in our process, and from the wet pulse protein concentrate produced by the method described herein. Analysis was outsourced to Natural Resources Institute Finland and was made by HPLC-based method modified from Gutierrez et al. (2006). The wet pulse protein concentrates were produced either from the mixture of faba bean - pea protein concentrate (mixing ratio 2:1, w/w), or from faba bean protein concentrate, and by using the method described in example 1. The measured dry matter contents of the resulting wet pulse protein concentrates were 33 and 35 wt-%'s respectively. In the case of the wet pulse protein concentrate made solely from faba bean, samples were collected from the solid fraction after each centrifugation step (D1, D2, D3), to demonstrate the efficiency of removal of the pyrimidine glycosides during the washing steps. Wet protein concentrate made from faba bean - pea mixture was analyzed only after the last centrifugation step (D3). Results demonstrating the accumulation of total pyrimidine glycosides to air classified protein concentrate, and subsequent removal from solid pulse protein fractions obtained from the centrifugation steps D1-D3, are presented in the table 2 below. The concentrations are presented as the wt-% of convicine and/or vicine, from the total weight of the dehulled faba bean flour, air classified faba bean protein concentrate, or wet pulse protein concentrates calculated as proportional to wet weight, i.e., on a wet basis (w/w). "

In table 3 below, the values presented in the table 2 are calculated as proportional to dry matter, i.e., on a dry basis (w/w), to allow more accurate comparison between the flour, air classified protein concentrate and the wet pulse protein concentrates.

The results show that two washing steps are adequate to decrease pyrimidine glycosides to a safe level. When converted to dry weight basis, pyrimidine glycosides in the dehulled faba bean flour are reduced from 10 g/kg to 0.57 g/kg in the wet faba bean protein concentrate during the two washing steps. The third washing step further decreases the amount pyrimidine glycosides, thereby further increasing the purity of the wet pulse protein concentrate.

**Table 2. Pyrimidine glycoside concentrations of dehulled faba bean flour I, air classified faba bean protein concentrate and wet pulse protein concentrate samples presented as mg/kg on a wet weight basis, i.e. the values are presented as milligram of respective pyrimidine glycoside / kilogram of wet sample.**

| Pyrimidine glycosides mg/kg (on a wet basis) | Dehulled faba bean flour | Air classified faba bean protein concentrate | Wet protein concentrate Faba bean / Pea | Wet protein concentrate Faba bean only | | |
|---|---|---|---|---|---|---|
| | | | after D3 | after D1 | after D2 | after D3 |
| Vicine | 5170 | 6850 | Trace (< 10) | 710 | 130 | 30 |
| Convicine | 3960 | 3200 | Not detected (< 5) | 470 | 70 | 10 |
| Total pyrimidine glycosides | 9130 | 10 050 | <15 | 1180 | 200 | 40 |

**Table 3. Pyrimidine glycoside concentrations of dehulled faba bean flour, air classified faba bean protein concentrate, and wet pulse protein concentrate samples calculated as proportional to dry matter. Some of the values are "not applicable" because vicine/convicine concentrations are bellow a detection limit. Dry matter content (wt-%) of each sample is also indicated as dm wt-%, of the total weight of the respective sample.**

| Pyrimidine glycosides mg/kg calculated as proportional to dry matter (dm) | Dehulled faba bean flour (dm 90 wt-%) | Air classified faba bean protein concentrate (dm 90 wt-%) | Wet pulse protein concentrate Faba bean / Pea | Wet pulse protein concentrate Faba bean only | | |
|---|---|---|---|---|---|---|
| | | | after D3 (dm 33 wt-%) | after D1 (dm 38 wt-%) | after D2 (dm 35 wt-%) | after D3 (dm 35 wt-%) |
| Vicine | 5739 | 7604 | not applicable | 1867 | 372 | 86 |
| Convicine | 4396 | 3552 | not applicable | 1236 | 200 | 29 |
| Total pyrimidine glycosides | 10 135 | 11 156 | not applicable | 3103 | 572 | 115 |

### Example 3: Analysis of oligosaccharide content from the wet pulse protein concentrate

Many oligosaccharides, especially α-galactosides, are well characterized antinutritional factors associated with pulses, causing a variety of digestive system problems. The oligosaccharide content of the wet pulse protein concentrate, produced from faba bean according to method on example 1, was initially analyzed using Thin Layer Chromatography method (TLC). Result was refined with outsourced HPLC-based analysis at Natural Resources Institute of Finland.

For TLC analysis, 10 g samples after each centrifugation step (D1, D2, D3) were collected. As a control, 4 g of air classified faba bean protein concentrate used as a raw material was mixed with up to 10 ml of water (D0). The dry matter wt-% of D1-D3 samples was measured by weighting an accurate amount of wet sample, removing the moisture from the wet sample by oven-drying at 110°C overnight, weighting an accurate amount of dry sample and calculating the percentage of dry sample from the wet sample. Dry matter content as g / 10 g sample was calculated, to ensure the approximate comparability of samples presented in table 4 below.

**Table 4: Dry matter estimation for TLC analysis samples. Control sample (D0) was air classified faba bean protein concentrate used as a raw material, wet faba bean protein concentrate samples (D1, D2, D3) were harvested after corresponding centrifugation step from the respective solid pulse protein fractions.**

| Sample code | Dry matter (wt-%) | Sample weight | Dry matter g / 10 g |
|---|---|---|---|
| D0 | 90% | 4 g / 10 ml of water > ∼10 g | 3.60 g |
| D1 | 38% | 10g | 3.85 g |
| D2 | 35% | 10g | 3.46 g |
| D3 | 35% | 10g | 3.57 g |

All the four sample tubes (D0, D1, D2, D3) were filled up to 30 ml of 94% EtOH. Samples were incubated at +30°C with continuous shaking 220 rpm for 3 hours. After the incubation, samples were centrifugated 5500 x G for 5 min and supernatants were filtered through miracloth to fresh tubes. 1 ml aliquots were taken. Aliquots were concentrated down to 200 µl in thermal incubator (65°C for approximately 4 h).

A thin Layer Chromatography (TLC) based analysis was made. For this, a dilution series of 1:1, 1:2, 1:4, 1:8. 1:16 and 1:32 was made of the concentrated D0 sample (air classified faba bean protein concentrate). The concentrated samples D0-D3 were applied undiluted in the TLC analysis. Commercial (Sigma-Aldrich) di- tri- and tetrasaccharides (saccharose, raffinose and stachyose 10 µg/µl) were used as standards.

Then, 1 µl of each, the concentrated D0-D3 samples, D0 dilution series samples, and oligosaccharide standards, were pipetted on TLC plate. A TLC run was conducted with running buffer composed of N-butanol : acetic acid : water (3 : 1 : 1 respectively). After the run, TLC plate was allowed to air dry and colored with orcinol stain specific to carbohydrates, according to standard procedure. The results of the TLC run is shown in Fig. 2. The results from the samples D0, D1, D2 and D3 were compared to the oligosaccharide standards and to the D0 dilution series samples. Results obtained from TLC analysis indicate that oligosaccharides present in the D0 sample are efficiently reduced during the washing steps from the samples D1, D2, and D3.

The result was verified by sending samples to Natural Resources Institute Finland, to be analyzed by their internal HPLC based method for bean oligosaccharides. Detection limit (DL) for the tested oligosaccharides was 5 mg/100g, which equals to 0.005 wt-% (w/w).

As there are indications in the background literature that oligosaccharides accumulate in the air classified protein concentrate, following samples were analyzed: dehulled faba bean flour, air classified faba bean protein concentrate, and wet faba bean protein concentrate (a third solid faba bean protein fraction) after decanter centrifugation step D3. Results are presented in the table 5 below.

The results indicate the α-galactosides indeed accumulate in the air classified faba bean protein concentrate, whereas all the tested oligosaccharides are almost completely removed from the wet faba bean protein concentrate during the three washing steps. Notably, the concentration of the α-galactosides raffinose, stachyose and verbascose was below the detection level of the test. Based on the results it was calculated, that even after two washing steps the total amount of raffinose, stachyose and verbascose would be 0.4 - 2.0 g/kg (equals to 0.04 - 0.2wt-% on a dry weight basis). This is consistent with the results seen in TLC analysis (Figure 2).

**Table 5. The Oligosaccharide concentrations measured from faba bean flour, faba bean protein concentrate, and wet faba bean protein concentrate samples with HPLC based method (Natural Resources Institute Finland). The values are presented as g/kg from the wet sample weight, i.e., the values are presented as gram of respective oligosaccharide / kg of wet sample. DL indicates detection limit. Total RFO indicates total raffinose family oligosaccharides raffinose, stachyose and verbascose.**

| Oligosaccharides g/kg (on a wet basis) | Dehulled faba bean flour | Air classified faba bean protein concentrate | Wet faba bean protein concentrate, sample D3 |
|---|---|---|---|
| Galactose | 0,14 | 0,27 | 0,01 |
| Glucose | 0,12 | 0,15 | 0,01 |
| Saccharose | 22,11 | 13,67 | 0,01 |
| Fructose | 0,28 | 0,17 | < DL 0.005 |
| Raffinose | 1,91 | 1,54 | < DL 0.005 |
| Stachyose | 7,50 | 9,48 | < DL 0.005 |
| Verbascose | 26,84 | 39,49 | < DL 0.005 |
| Total RFO's | 36,25 | 50,51 | not applicable |
| Total | 58,90 | 64,77 | 0,03 |

On table 6, the values presented in the table 5 are calculated as proportional to dry matter, to allow more accurate comparison between the flour, air classified faba bean concentrate and wet faba bean protein concentrate sample D3.

**Table 6. The oligosaccharide concentrations from table 5, calculated on dry matter basis (g/kg). Dry matter content (wt-%) of each sample is also indicated as dm wt-%, of the total weight of the respective sample.**

| Oligosaccharides g/kg on dry matter basis (dm) | Dehulled faba bean flour (dm 90 wt-%) | Air classified faba bean concentrate (dm 90 wt-%) | Wet faba bean protein concentrate sample D3 (dm 35 wt-%) |
|---|---|---|---|
| Galactose | 0,16 | 0,30 | 0,03 |
| Glucose | 0,13 | 0,17 | 0,03 |
| Saccharose | 24,54 | 15,17 | 0,03 |
| Fructose | 0,31 | 0,19 | not applicable |
| Raffinose | 2,12 | 1,71 | not applicable |
| Stachyose | 8,30 | 10,52 | not applicable |
| Verbascose | 29,79 | 43,83 | not applicable |
| Total RFO's | 40,21 | 56,06 | not applicable |
| Total | 65,35 | 71,89 | not applicable |

### Example 4: Production of starch reduced wet pulse protein concentrate to increase the protein content

Protein content of the wet pulse protein concentrate can be further increased by an amylase enzyme treatment during the process for producing the wet pulse protein concentrate. An amylase enzyme treatment of the first pulse protein slurry before the decanter centrifugation steps D1-D3 was included in the process for producing the wet pulse protein concentrate. Air classified faba bean protein concentrate was first dispersed into the pre-heated aqueous solution as according to the method presented in the example 1. After the dispersion, a commercial amylase enzyme, Novozymes Fungamyl, was added in a ratio 1:1000 to the first pulse protein slurry, having a temperature of +48°C, and a pH of pH 4.8. The first pulse protein slurry comprising the amylase enzyme was then stirred for 1 h, after which the washing steps and centrifugations D1-D3 were conducted as described in the example 1. Sample of the wet faba bean protein concentrate was collected from the third solid pulse protein fraction after three washing steps and centrifugation D3. A reference sample of the wet faba bean protein concentrate was prepared similarly without the amylase enzyme treatment. Protein content of the samples was analyzed at Eurofins Scientific by accredited Kjeldahl nitrogen analysis method. Results as a dry weight basis are shown in table 7. For comparison, the table 7 includes also literature-based information of the protein content of faba bean seeds and protein content of air classified faba bean protein concentrate. Results indicate that protein content of the wet faba bean protein concentrate is higher than the protein content of the air classified faba bean protein concentrate, on dry matter basis. Moreover, the protein content is further increased when amylase enzyme treatment is included in the process for producing a wet pulse protein concentrate.

**Table 7. Protein concentrations of samples of the wet faba bean protein concentrate, obtained with or without amylase enzyme treatment, after the third washing step and centrifugation D3. Literature-based values for faba bean seed and air classified faba bean protein concentrate protein content are also included. The values are presented as wt-% of protein from the dry sample weight (w/w).**

| Process stages from seeds to wet pulse protein concentrate, faba bean as starting material | Protein content (wt-%), on a dry weight basis |
|---|---|
| Faba bean seed (literature-based values) | 24-32 wt-% |
| Air classified faba bean protein concentrate (protein content based on two commercial products) | 60-65 wt-% |
| Wet faba bean protein concentrate (analyzed at Eurofins) | 70 wt-% |
| Wet faba bean protein concentrate, incl. amylase treatment (analyzed at Eurofins) | 76 wt-% |

In addition to the protein content, the starch content of dehulled faba bean flour, air classified faba bean protein concentrate, wet faba bean protein concentrate (with and without amylase treatment) was analyzed. The analysis was made with Megazymes Total Starch Determination kit K-TSTA, using the protocol for determination of starch in cereal and food products not containing resistant starch, exactly according to kits instructions. The results indicate that wet faba bean protein concentrate contains a higher wt-% of starch (10.8 wt-%) when compared to the air classified faba bean protein concentrate (9.2 wt-%). This increase in the starch concentration is likely due to removal of antinutritional factors during the washing steps of the wet faba bean protein concentrate process. Moreover, results indicate that the starch content of the wet faba bean protein concentrate can be effectively reduced when the amylase enzyme treatment is included in the process for producing a wet pulse protein concentrate.

**Table 8. Starch concentrations measured from various samples, the values being presented as wt-% of starch on dry weight basis. The samples include the wet faba bean protein concentrate obtained through a process with (amylase), and without (no amylase) amylase enzyme treatment.**

| Sample | Starch content (wt-%), dry weight basis |
|---|---|
| Dehulled faba bean flour | 44.2 wt-% |
| Air classified faba bean protein concentrate | 9.2 wt-% |
| Wet faba bean protein concentrate (no amylase) | 10.8 wt-% |
| Wet faba bean protein concentrate (amylase) | 6.2 wt-% |

### Example 5: Analysis of phytic acid content of wet protein concentrate

Phytic acid was measured from dehulled faba bean flour, from air classified faba bean protein concentrate and from wet faba bean protein concentrate obtained with the method as described in the example 1 and including the amylase enzyme treatment as described in the example 4, a reference sample of the wet faba bean protein concentrate was prepared without the amylase treatment. Phytic acid measurement was conducted with Megazyme's phytic acid/total phosphorus kit according to kits instructions. In brief, method involves acid extraction of inositol phosphates followed by treatment with a phytase that is specific for phytic acid (IP6) and the lower myo-inositol phosphate forms (i.e., IP2, IP3, IP4, IP5). Subsequent treatment with alkaline phosphatase ensures the release of the final phosphate from myoinositol phosphate (IP1) which is relatively resistant to the action of phytase. The total phosphate released is measured using a modified colorimetric method and given as grams of phosphorus per 100 g of sample material. Results of the measurement are presented in table 9 below. Results show a 2.4x accumulation of phytic acid to the air classified faba bean protein concentrate, and efficient reduction of phytic acid in the wet faba bean protein concentrate.

**Table 9. Phytic acid content of dehulled faba bean flour, air classified faba bean protein concentrate and wet faba bean protein concentrates (obtained with or without amylase treatment).**

| Sample | Dry matter (g/100 g) | Phytic acid on a wet basis (g/100 g) | Phytic acid calculated on a dry basis (g/100g) |
|---|---|---|---|
| Dehulled faba bean flour | 90 | 0,89 | 1,00 |
| Air classified faba bean protein concentrate | 90 | 2,15 | 2,39 |
| Wet faba bean protein concentrate | 35 | 0,51 | 1,48 |
| Wet faba bean protein concentrate, incl. amylase treatment | 32 | 0,53 | 1,68 |

### Example 6: Preparing of vegan mayonnaise from wet pulse protein concentrate

Wet protein concentrate can be used for food production as such, for example for vegan mayonnaise production, as exemplified below. Wet pulse protein concentrate is diluted by adding 2.5 - 3 parts of water per 1 part of wet pulse protein concentrate by weight and mixing with handheld mixer. pH is adjusted to approximately pH 7 with 10% (w/w) natriumhydroxide. The resulting slurry is then heated in water bath to +85 °C for 15 minutes. Once cooled to a room temperature, the slurry is emulsified by adding 2 parts of vegetable oil and mixing vigorously with handheld mixer. Acetic acid is added to the resulting emulsion to a final concentration of 0.25-0.5 wt-% and a resulting a mayonnaise base is mixed vigorously again, with handheld mixer. Finally, salt, sugar and seasoning to taste are added. Mayonnaise obtained this way is then used traditionally, for example with salads, burgers, and sandwiches.

Various embodiments have been presented. It should be appreciated that in this document, words comprise, include, and contain are each used as open-ended expressions with no intended exclusivity.

The foregoing description has provided by way of non-limiting examples of particular implementations and embodiments a full and informative description of the best mode presently contemplated by the inventors for carrying out the invention. It is however clear to a person skilled in the art that the invention is not restricted to details of the embodiments presented in the foregoing, but that it can be implemented in other embodiments using equivalent means or in different combinations of embodiments without deviating from the characteristics of the invention.

Furthermore, some of the features of the afore-disclosed example embodiments may be used to advantage without the corresponding use of other features. As such, the foregoing description shall be considered as merely illustrative of the principles of the present invention, and not in limitation thereof. Hence, the scope of the invention is only restricted by the appended patent claims.

### References

Gutierrez, N., Avila, C.M., Duc, G., Marget, P., Suso, M.J., Moreno, M.T., Torres, A.M. CAPs markers to assist selection for low vicine and convicine contents in faba bean (Vicia faba L.). Theor. Appl. Genet. 2006, 114, 59-66.

## Claims

1. A wet pulse protein concentrate, comprising:
55 - 80 wt-% of moisture, and
20 - 45 wt-% of dry matter,
of the total weight of the wet pulse protein concentrate, wherein the dry matter comprises
at least 55 wt-% of protein,
at least 5 wt-% of starch, and
less than 0.5 wt-% of raffinose, stachyose and verbascose,
of the total weight of the dry matter of the wet pulse protein concentrate.

2. The wet pulse protein concentrate of claim 1, wherein the pulse is selected from *Pisum sativum, Vicia faba, Cicer arietinum, Vigna radiata,* or combinations thereof, preferably the pulse is *Pisum sativum, Vicia faba,* or combinations thereof.

3. The wet pulse protein concentrate of claim 1 or 2, comprising:
- 55 - 85 wt-%, 60 - 85 wt-%, or 70 - 85 wt-% of protein from the total weight of the dry matter of the wet pulse protein concentrate;
- at least 7 wt-%, or at least 10 wt-% of starch from the total weight of the dry matter of the wet pulse protein concentrate; or
- any combination thereof.

4. The wet pulse protein concentrate of any one of claims 1 - 3, comprising less than 2 wt-%, preferably less than 1.5 wt-% of phytic acid of the total weight of the dry matter of the wet pulse protein concentrate.

5. The wet pulse protein concentrate of any one of claims 1 - 4, comprising less than 800 mg/kg, preferably less than 400 mg/kg, more preferably less than 200 mg/kg, even more preferably less than 100 mg/kg of convicine and vicine.

6. A process for producing a wet pulse protein concentrate, the process comprising:
(i) providing dehulled pulse seeds;
(ii) grinding the dehulled pulse seeds, thereby obtaining a pulse seed powder;
(iii) exposing the pulse seed powder to air classification, thereby obtaining an air classified pulse protein concentrate comprising at least 45 wt-% of protein from the total weight of the air classified pulse protein concentrate;
(iv) dispersing the air classified pulse protein concentrate into a first aqueous solution having a pH 3.5 - 5.5, thereby obtaining a first pulse protein slurry;
(v) centrifuging the first pulse protein slurry and recovering a first solid pulse protein fraction;
(vi) dispersing the first solid pulse protein fraction into a second aqueous solution having a pH 3.5 - 5.5, thereby obtaining a second pulse protein slurry; and
(vii) centrifuging the second pulse protein slurry, and recovering a second solid pulse protein fraction,
thereby obtaining the wet pulse protein concentrate.

7. The process of claim 6, wherein the dehulled pulse seeds comprise:
- 15 - 40 wt-% or 17 - 35 wt-% of pulse protein, from the total weight of the dehulled pulse seeds;
- at least 22 wt-%, at least 40 wt-%, or at least 50 wt-% of starch, from the total weight of the dehulled pulse seeds;
- less than 7 wt-%, less than 5 wt-%, less than 3 wt-%, less than 2 wt-%, or less than 1 wt-% of fats, from the total weight of the dehulled pulse seeds;
- more than 20 g/kg, or more than 60 g/kg of at least one of raffinose, stachyose, and verbascose, from the total weight of the dehulled pulse seeds;
- more than 2 g/kg, or more than 10 g/kg of at least one of convicine and vicine, from the total weight of the dehulled pulse seeds; or
- any combination thereof.

8. The process of claim 6 or 7, wherein amylase enzyme is added to the first pulse protein slurry at the step (iv), thereby increasing the protein content and decreasing the starch content of the wet pulse protein concentrate.

9. The process of any one of claims 6 - 8, comprising the steps:
(viii) dispersing the second solid pulse protein fraction into a third aqueous solution having a pH 3.5 - 5.5, thereby obtaining a third pulse protein slurry; and
(ix) centrifuging the third pulse protein slurry, and recovering a third solid pulse protein fraction,
thereby obtaining the wet pulse protein concentrate.

10. The process of claim 9, wherein
- the first solid pulse protein fraction comprises at least 80 wt-% less of convicine and/or vicine than the air classified pulse protein concentrate; and/or
- the second solid pulse protein fraction comprises at least 96 wt-% less of convicine and/or vicine, than the air classified pulse protein concentrate; and/or
- the third solid pulse protein fraction comprises at least 99 wt-% less of convicine and/or vicine, than the air classified pulse protein concentrate.

11. The process of any one of claims 6 - 10, wherein the step iv) comprises dispersing the air classified pulse protein concentrate into the aqueous solution in a ratio from 1:3 to 1:20 (w/w).

12. The process of any one of claims 9 - 11, wherein the first and/or second and/or third aqueous solutions are independently selected from
- an aqueous solution comprising weak food grade acid, such as lactic acid;
- an aqueous solution comprising strong food grade acid such as sulfuric acid;
- an aqueous solution comprising one or more food grade process aids, such as disodium calcium EDTA, polyvinyl pyrrolidone or antifoaming agent; and
- any combination thereof.

13. The process of any one of claims 9 - 12, wherein the pulse protein slurry of any one of the steps iv) - ix) has:
- a temperature of 4 - 80 °C, preferably the temperature is 50 °C; and/or
- a pH 3.5 - 5.5, preferably the pH is 4.8.

14. A use of the wet pulse protein concentrate of any one of claims 1 - 5 in foodstuff preparation and/or in a food application, preferably in preparation of fermented plant-based dairy alternatives.

15. A foodstuff product comprising the wet pulse protein concentrate of any one of claims 1 - 5.
